# EUROPÄISCHE PATENTSCHRIFT

(11) **EP 2 962 899 B1**
(45) Veröffentlichungstag und Bekanntmachung des Hinweises auf die Patenterteilung: **26.02.2020**
(21) Anmeldenummer: 15174289.7
(22) Anmeldetag: 29.06.2015
(51) Int. Cl.: B60R 9/10, B60D 1/06

(54) **ANHÄNGEKUPPLUNG UND LASTENTRÄGEREINRICHTUNG FÜR EINE ANHÄNGEKUPPLUNG**
TRAILER COUPLING AND LOAD SUPPORT DEVICE FOR A TRAILER COUPLING
ATTELAGE ET DISPOSITIF DE SUPPORT DE CHARGES D'ATTELAGE

(30) Priorität: 30.06.2014 DE 102014109134
(43) Veröffentlichungstag der Anmeldung: 06.01.2016
(73) Patentinhaber: ACPS Automotive GmbH, 71706 Markgröningen (DE)
(72) Erfinder: Rimmelspacher, Bernhard, 76287 Rheinstetten (DE); Gentner, Wolfgang, 71711 Steinheim (DE); Kadnikov, Aleksej, 71229 Leonberg (DE)
(74) Vertreter: Hoeger, Stellrecht & Partner Patentanwälte mbB

(56) Entgegenhaltungen:
- EP-A1- 2 258 567
- EP-A2- 2 361 808
- EP-A2- 2 759 421
- DE-U1- 9 305 689
- US-A1- 2005 205 629

## Beschreibung

Die Erfindung betrifft eine Anhängekupplung für Kraftfahrzeuge umfassend ein mit einem ersten Ende mittels eines Kugelhalsträgers fahrzeugfest an einer Heckpartie eines Kraftfahrzeugs montierbaren Kugelhals der an einem zweiten Ende eine Kupplungskugel trägt.

Derartige Anhängekupplungen sind aus der EP 2 258 567 A1 oder der EP 2 361 808 A2 oder der DE 93 05 689 U bekannt.

Primär dienen derartige Anhängekupplungen dazu, einen Anhänger anzuhängen, welcher mit einer Zugkugelkupplung an der Kupplungskugel angreift. Vielfach dient jedoch auch eine Anhängekupplung dazu, einen Lastenträger, beispielsweise für Fahrräder oder Ski oder andere Sportgeräte, zu montieren, um diese in einfacher Weise transportieren zu können.

Der Erfindung liegt daher die Aufgabe zugrunde, eine Anhängekupplung der eingangs beschriebenen Art derart zu verbessern, dass in einfacher Weise Lastenträger montiert und sicher gehalten werden können.

Diese Aufgabe wird bei einer Anhängekupplung der eingangs beschriebenen Art erfindungsgemäß durch die Merkmale des Anspruchs 1 gelöst .

Das heißt, dass ausgehend von einem Verlauf des Kugelhalses oder des Kugelhalsabschnittes der erste Positionierkörper auf diesem aufsitzt oder von diesem absteht oder den Kugelhalsabschnitt ganz oder teilweise umschließt.

Die Anordnung des ersten Positionierkörpers hat ferner den Vorteil, dass es damit möglich ist, bei sehr vielen Formen des Kugelhalses den ersten Positionierkörper stets im gleichen definierten Abstand von der Kupplungskugel und weitgehend unabhängig von der Form des Kugelhalses, insbesondere einer Abkröpfung desselben, anzuordnen und eine standardisierte Position des ersten Positionierkörpers relativ zur Kupplungskugel einzuhalten.

Der Vorteil der erfindungsgemäßen Lösung ist dabei darin zu sehen, dass ein derartiger erster Positionierkörper die Möglichkeit eröffnet, in einfacher Weise die Lastenträgerhalteeinrichtung und relativ zum Kugelhals zu positionieren, das heißt auszurichten und in der ausgerichteten Stellung zu halten.

Insbesondere erfolgt dabei das Positionieren der Lastenträgerhalteeinrichtung auch dadurch, dass sich diese an der Kupplungskugel abstützt, so dass dabei die Positionierung der Lastenträgerhalteeinrichtung einerseits über ein Abstützen an der Kupplungskugel und andererseits über ein Abstützen an dem ersten Positionierkörper erfolgt.

Dabei kann der mindestens eine erste Positionierkörper ein separater Körper sein, der durch Montageelemente mit dem Kugelhalsabschnitt verbunden ist oder durch Formschluss mit an dem Kugelhalsabschnitt gehalten ist.

Es ist aber auch denkbar, dass der mindestens eine Positionierkörper an den Kugelhalsabschnitt angeformt ist, beispielsweise einstückig angeformt ist, zum Beispiel als Materialanhäufung oder Verdickung.

Hinsichtlich der Ausbildung des mindestens einen ersten Positionierkörpers ist es besonders günstig, wenn der mindestens eine erste Positionierkörper mindestens eine erste Positionierfläche trägt, über welche eine Positionierung der Lastenträgerhalteeinrichtung erfolgen kann.

Beispielweise ist hierzu vorgesehen, dass die mindestens eine erste Positionierfläche außerhalb einer Projektionskontur der Kupplungskugel liegt, welche durch Projektion der Kupplungskugel auf den ersten Positionierkörper entsteht, wobei insbesondere die Projektionskontur den mindestens einen ersten Positionierkörper schneidet.

Die Projektion der Kupplungskugel auf dem Positionierkörper erfolgt vorzugsweise parallel zu einer Aufsetzrichtung längs welcher die Lastenträgerhalteeinrichtung bewegbar ist, um diese auf die Kupplungskugel und den Kugelhals aufzusetzen.

Insbesondere verläuft die Aufsetzrichtung ungefähr parallel zu einer Kugelmittelachse der Kupplungskugel und des Kugelansatzes, wobei unter einen ungefähr parallelen Verlauf der Aufsetzrichtung zur Kugelmittelachse zu verstehen ist, dass der Winkel zwischen der Kugelmittelachse und der Aufsetzrichtung gleich oder kleiner als 20°, vorzugsweise gleich oder kleiner als 10°, noch besser gleich oder kleiner als 5° ist, wobei eine einfach konzipierbare Lösung einen parallelen Verlauf vorsieht.

Ferner ist vorzugsweise vorgesehen, dass die Aufsetzrichtung parallel zu einer Längsmittelebene des Kugelhalses und/oder parallel zur einer Querebene verläuft, die senkrecht zu einer Längsmittelebene des Kugelhalses ausgerichtet ist.

Das heißt, dass die erste Positionierfläche jeweils in einem derartigen Abstand von dem Kugelhals oder dem Kugelhalsabschnitt angeordnet ist, dass sie außerhalb der Projektionskontur der Kupplungskugel auf den Positionierkörper liegt und somit in einfacher Weise zur Positionierung der Lastenträgerhalteeinrichtung zur Verfügung steht, wenn die Lastenträgerhalteeinrichtung auf die Kupplungskugel aufgesetzt wird, das heißt, die Kupplungskugel übergreift oder umgreift, um sich an der Kupplungskugel abzustützen.

Insbesondere besteht damit die einfache Möglichkeit, die Lastenträgerhalteeinrichtung derart auszubilden, dass eine Kugelaufnahme auf die Kupplungskugel aufgesetzt werden kann oder diese umgreift und dabei ohne Beeinträchtigung des Zugangs zu der Kugelaufnahme eine Wechselwirkung mit den Positionierflächen des Positionierkörpers möglich ist, um die Lastenträgerhalteeinrichtung an der mindestens einen Positionierfläche des Positionierkörpers abzustützen.

Hinsichtlich der Ausbildung der Positionierfläche wurden im Zusammenhang mit der bisherigen Erläuterung der einzelnen Ausführungsformen keine näheren Angaben gemacht.

So sieht eine besonders günstige Lösung vor, dass die mindestens eine erste Positionierfläche mindestens einen Führungsflächenbereich aufweist, welcher parallel zu einer Aufsetzrichtung der Lastenträgerhalteeinrichtung verläuft.

Ferner wurden im Zusammenhang mit der bisherigen Erläuterung der einzelnen Ausführungsformen keine näheren Angaben zu der Anordnung der mindestens einen ersten Positionierfläche an dem ersten Positionierkörper gemacht.

Die erfindungsgemäße Lösung sieht vor, dass die mindestens eine erste Positionierfläche an einer Außenseite des ersten Positionierkörpers angeordnet ist, so dass dadurch eine einfache Wechselwirkung mit der Positionierfläche möglich ist.

Besonders günstig ist es dabei, wenn der erste Positionierkörper als geschlossener Körper, vorzugsweise als massiver Körper ausgebildet ist.

Im Zusammenhang mit den bisherigen Erläuterungen der einzelnen Ausführungsformen wurde davon ausgegangen, dass mindestens ein erster Positionierkörper an dem Kugelhalsabschnitt angeordnet ist.

Eine verbesserte Positionierung oder eine stabilere Positionierung der Lastenträgerhalteeinrichtung ist jedoch aber dadurch möglich, dass an dem Kugelhalsabschnitt auf einander gegenüberliegenden Seiten desselben jeweils ein Positionierkörper angeordnet ist, so dass die Abstützung der Lastenträgerhalteeinrichtung über zwei erste Positionierkörper erfolgen kann.

Beispielsweise wäre es denkbar, die ersten Positionierkörper auf einander gegenüberliegenden Seiten in einer Längsmittelebene des Kugelhalses anzuordnen.

Alternativ ist es aber auch denkbar, die ersten Positionierkörper am Kugelhals auf einander gegenüberliegenden Seiten einer quer, insbesondere senkrecht, zur Längsmittelebene verlaufenden Querebene des Kugelhalses anzuordnen.

Insbesondere ist es günstig, wenn die ersten Positionierkörper in einer Arbeitsstellung des Kugelhalses auf einander gegenüberliegenden Seiten einer Längsmittelebene der Anhängekupplung angeordnet sind, wobei in der Arbeitsstellung des Kugelhalses die Längsmittelebene der Anhängekupplung auch mit einer Längsmittelebene der Kraftfahrzeugkarosserie und insbesondere der Längsmittelebene des Kugelhalses zusammenfällt.

Dabei könnten die ersten Positionierkörper ebenfalls noch in einer Richtung parallel zu der Längsmittelebene gegeneinander versetzt am Kugelhals angeordnet sein.

So sieht eine besonders günstige Lösung vor, dass die ersten Positionierkörper in derselben Querebene liegen, welche quer, insbesondere senkrecht, zur Längsmittelebene und insbesondere ungefähr parallel zur Mittelachse der Kupplungskugel verläuft.

Besonders günstig ist eine Lösung, bei welcher die ersten Positionierkörper spiegelsymmetrisch zur Längsmittelebene des Kugelhalses angeordnet sind und somit auf beiden Seiten der Längsmittelebene in exakt derselben relativen Position zur Kupplungskugel angeordnet sind, da die Kupplungskugel ohnehin spiegelsymmetrisch zur Längsmittelebene ausgebildet ist.

Hinsichtlich der Funktion der ersten Positionierkörper wurden im Zusammenhang mit der bisherigen Beschreibung der einzelnen Ausführungsbeispiele keine näheren Angaben gemacht.

Eine andere vorteilhafte Lösung sieht jedoch vor, dass der mindestens eine erste Positionierkörper nicht nur zur definierten Ausrichtung der Lastenträgerhalteeinrichtung relativ zum Kugelhals und zur Kupplungskugel dient, sondern gleichzeitig auch die Traglast aufnimmt, so dass die Kupplungskugel in diesem Fall nicht dazu beiträgt, die Lastenträgerhalteeinrichtung zu tragen, sondern im Zusammenwirken mit der Lastenträgerhalteeinrichtung nur dazu, die Lastenträgerhalteeinrichtung definiert zum Kugelhals ausgerichtet zu halten.

Auch hinsichtlich der Anordnung oder des Verlaufs der mindestens einen ersten Positionierfläche wurden bislang keine näheren Angaben gemacht.

So könnten beispielsweise die ersten Positionierflächen eine andere Symmetrie relativ oder keine Symmetrie relativ zur Längsmittelebene aufweisen.

Eine besonders zweckmäßige Lösung sieht jedoch vor, dass die mindestens eine erste Positionierfläche der ersten Positionierkörper spiegelsymmetrisch zur Längsmittelebene des Kugelhalses ausgebildet ist, so dass auch die Positionierflächen selbst eine Spiegelsymmetrie zur Längsmittelebene aufweisen.

Hinsichtlich der Ausbildung und Form des mindestens einen ersten Positionierkörpers selbst im Einzelnen wurden bislang keine näheren Angaben gemacht.

So sieht eine besonders günstige Lösung vor, dass sich der mindestens eine erste Positionierkörper ausgehend von einem diesen tragenden Kugelhalsabschnitt in einer Erstreckungsrichtung vom Kugelhalsabschnitt weg erstreckt.

Dies ist eine einfache und zweckmäßige Gestaltung des Positionierkörpers, die eine Abstützung der Lastenträgerhalteeinrichtung an diesem erleichtert.

Beispielsweise wäre es in diesem Zusammenhang möglich, den mindestens einen ersten Positionierkörper so auszubilden, dass dieser sich in derart einer Verzweigung des Kugelhalses oder in derart einer Ausformung des Kugelhalses erstreckt.

Eine besonders einfache Realisierungsform sieht vor, dass die Erstreckungsrichtung des mindestens einen ersten Positionierkörpers quer zu dem diesen tragenden Kugelhalsabschnitt verläuft.

Bei einem derartigen ersten Positionierkörper wurden ferner ebenfalls noch keine Angaben über den Verlauf der ersten Positionierfläche relativ zur Erstreckungsrichtung gemacht.

So sieht eine vorteilhafte Lösung vor, dass die mindestens eine erste Positionierfläche parallel zur Erstreckungsrichtung oder in einem Winkel von weniger als 30°, noch besser weniger als 20° zur Erstreckungsrichtung des Positionierkörpers verläuft.

Erfindungsgemäß ist vorgesehen, dass die mindestens eine Positionierfläche ein Flächenbereich einer geometrischen Fläche ist, welche den den Positionierkörper tragenden Kugelhalsabschnitt schneidet, sich also quer zu diesem Kugelhalsabschnitt erstreckt.

Hinsichtlich der Anordnung der Positionierflächen an dem Positionierkörper sind die unterschiedlichsten Möglichkeiten denkbar.

Erfindungsgemäß ist ferner vorgesehen, dass der mindestens eine erste Positionierkörper auf einander gegenüberliegenden Seiten angeordnete erste Positionierflächen aufweist.

Insbesondere sind dabei die auf gegenüberliegenden Seiten des Positionierkörpers angeordneten ersten Positionierflächen so ausgebildet, dass sie auf gegenüberliegenden Seiten einer quer, insbesondere senkrecht, zur Längsmittelebene verlaufenden Querebene liegen.

Vorzugsweise sind die ersten Positionierflächen auch so ausgebildet, dass sie spiegelsymmetrisch zu der Querebene verlaufen.

Im Zusammenhang mit der Funktion der Positionierflächen wurden bei einem vorstehend erwähnten Ausführungsbeispiel Führungsflächenbereiche beschrieben, welche parallel zur Aufsetzrichtung verlaufen sollen.

Alternativ oder ergänzend dazu ist es aber auch denkbar, dass die mindestens eine erste Positionierfläche mindestens einen Positionierflächenbereich aufweist, der quer zu der Aufsetzrichtung verläuft.

Ferner besteht die Möglichkeit bei derartigen, sich quer zur Aufsetzrichtung erstreckenden Positionierflächenbereichen zwei quer zur Aufsetzrichtung verlaufende Positionierflächenbereiche so anzuordnen, dass diese mit zunehmender Erstreckung in der Aufsetzrichtung mit zunehmenden Abstand oder mit abnehmenden Abstand relativ zueinander verlaufen, das heißt, dass die ersten Positionierflächenbereiche zusammen eine keilähnliche Wirkung entfalten können, um eine exakte Positionierung an diesen zu erreichen.

Dabei können die zwei ersten Positionierflächenbereiche konisch oder parabolisch oder hyperbolisch oder in Form von Zylinder- oder Kugelflächenbereichen relativ zueinander verlaufen.

Ferner ist es zweckmäßig, wenn derartige erste Positionierflächenbereiche symmetrisch zur Aufsetzrichtung verlaufen, so dass eine zur Aufsetzrichtung symmetrische exakte Positionierung realisierbar ist.

Im Zusammenhang mit den bislang beschriebenen Ausführungsbeispielen wurde lediglich mindestens eine erste Positionierfläche offenbart.

Um eine möglichst sichere Positionierung einer Lastenträgerhalteeinrichtung zu erreichen, ist ferner erfindungsgemäß vorgesehen, dass an dem Kugelhals mindestens eine zweite Positionierfläche angeordnet ist, welche quer zur ersten Positionierfläche verläuft.

Außerdem ist erfindungsgemäß die mindestens eine zweite Positionierfläche an einem Kugelhalsabschnitt des Kugelhalses angeordnet, welcher an einen die Kupplungskugel tragenden Kugelansatz des Kugelhalses angrenzt und insbesondere den ersten Positionierkörper trägt.

Die mindestens eine zweite Positionierfläche ist beispielsweise an dem ersten Positionierkörper angeordnet, so dass der erste Positionierkörper sowohl die erste Positionierfläche als auch die zweite Positionierfläche trägt.

Eine andere vorteilhafte Lösung sieht vor, dass die mindestens eine zweite Positionierfläche an einem zweiten Positionierkörper angeordnet ist.

Dabei kann der zweite Positionierkörper im Anschluss an den ersten Positionierkörper angeordnet sein oder es ist vorteilhafterweise vorgesehen, dass der zweite Positionierkörper im Abstand von dem ersten Positionierkörper angeordnet ist.

Eine weitere vorteilhafte Lösung sieht vor, dass die mindestens eine zweite Positionierfläche außerhalb einer Projektionskontur der Kupplungskugel liegt, welche durch Projektion der Kupplungskugel auf den die jeweilige zweite Positionierfläche tragende Positionierkörper entsteht, wobei insbesondere die Projektionskontur den jeweiligen Positionierkörper schneidet.

Das heißt, dass die zweite Positionierfläche ebenfalls außerhalb dieser Projektionskontur liegt, in gleicher Weise wie die erste Positionierfläche.

Beispielsweise wäre es denkbar, die zweite Positionierfläche sogar radial außerhalb der ersten Positionierfläche vorzusehen.

Eine andere vorteilhafte Lösung sieht vor, dass die mindestens eine zweite Positionierfläche innerhalb einer Projektionskontur der Kupplungskugel liegt, welche durch Projektion der Kupplungskugel auf den die mindestens eine zweite Positionierfläche tragenden Positionierkörper entsteht, wobei insbesondere die Projektionskontur den jeweiligen Positionierkörper schneidet.

Alternativ zu der Ausbildung des Positionierkörpers derart, dass dieser sich in einer Erstreckungsrichtung erstreckt, ist vorgesehen, dass der erste Positionierkörper durch einen an dem den Positionierkörper tragenden Kugelhalsabschnitt sitzenden Auflagekörper gebildet ist, wobei ein derartiger Auflagekörper durch eine auf dem Kugelhalsabschnitt angeordnete Materialauflage gebildet ist.

In einem speziellen Fall ist es beispielsweise denkbar, den ersten Positionierkörper durch einen an dem diesen tragenden Kugelhalsabschnitt gebildeten Kragen zu realisieren.

In diesem Fall ist vorzugsweise vorgesehen, dass die mindestens eine erste Positionierfläche an einer dem Kugelhalsabschnitt abgewandten Außenseite des ersten Positionierkörpers liegt.

Dabei ist beispielsweise vorgesehen, dass die mindestens eine Positionierfläche auf einer Seite der Längsmittelebene des Kugelhalses angeordnet ist.

Beispielsweise ist in diesem Fall vorgesehen, dass die mindestens eine Positionierfläche einen von einem rotationssymmetrischen Verlauf zur Mittelachse der Kupplungskugel abweichenden Verlauf hat.

Besonders einfach ist dies realisierbar, wenn die mindestens eine erste Positionierfläche eine Abflachung des Positionierkörpers umfasst.

Insbesondere lässt sich dies dadurch realisieren, dass die mindestens eine erste Positionierfläche in einer den den ersten Positionierkörper tragenden Kugelhalsabschnitt nicht schneidenden geometrischen Fläche liegt.

Eine besonders günstige Gestaltung sieht vor, dass an dem Kugelhals zwei erste Positionierkörper vorgesehen sind und dass die mindestens eine erste Positionierfläche des einen Positionierkörpers einen Flächenabschnitt aufweist, der in einer geometrischen Ebene liegt, die mit der geometrischen Ebene, in welcher ein Flächenabschnitt der mindestens einen Positionierfläche des anderen Positionierkörpers liegt, einen Winkel von weniger als 120° miteinander einschließt.

Vorzugsweise beträgt der Winkel weniger als 100°, noch besser weniger als 90°.

Hinsichtlich der Positionierflächen selbst wurden bislang keine näheren Angaben gemacht.

Insbesondere wenn der Positionierkörper einstückig an den Kugelhals angeformt ist, ist es vorteilhaft, wenn die Positionierflächen maschinell bearbeitete Flächen sind, um deren Lage und Ausrichtung relativ zur Kupplungskugel exakt festlegen zu können.

Darüber hinaus wird die eingangs genannte Aufgabe erfindungsgemäß auch durch eine Lastenträgereinrichtung für eine einen Kugelhals und eine Kupplungskugel aufweisende Anhängekupplung, insbesondere für eine Anhängekupplung gemäß einem oder mehreren der voranstehend beschriebenen Merkmale, erfindungsgemäß dadurch gelöst, dass die Lastenträgerhalteeinrichtung einen Gehäusekörper mit einer Kugelaufnahme für die Kupplungskugel des Kugelhalses der Anhängekupplung umfasst und dass die Lastenträgerhalteeinrichtung mindestens ein fest mit dem Gehäusekörper verbundenes Positionsaufnahmeelement umfasst, welches mit dem an dem Kugelhals angeordneten Positionierkörper zusammenwirkt.

Der Vorteil der erfindungsgemäßen Lösung ist somit darin zu sehen, dass im Gegensatz zu den bekannten Lastenträgerhalteeinrichtungen, bei welchen eine Fixierung des Gehäusekörpers an der Kupplungskugel selbst, beispielsweise durch eine Klemmvorrichtung, erfolgt, durch das Zusammenwirken des mindestens einen Positionsaufnahmeelements mit dem Positionierkörper die Möglichkeit gegeben ist, eine bessere und präzisere Ausrichtung der Lastenträgerhalteeinrichtung relativ zum Kugelhals und zur Kupplungskugel zu erreichen, wobei insbesondere das Positionsaufnahmeelement und der Positionierkörper eine definierte und zusätzliche Abstützung der Lastenträgerhalteeinrichtung an dem Kugelhals mit der Kupplungskugel zu erreichen.

Der Vorteil der erfindungsgemäßen Lösung ist dabei außerdem zu sehen, dass damit die Möglichkeit besteht einerseits in einfacher Weise und andererseits möglichst stabil die Lastenträgerhalteeinrichtung mit dem die Kupplungskugel tragenden Kugelhals zu verbinden und eine stabile und sichere Verbindung zwischen diesen herzustellen.

Insbesondere erfolgt das Zusammenwirken zwischen dem Positionsaufnahmeelement und dem Positionierkörper unter Bildung eines Formschlusses.

Insbesondere ist dabei vorgesehen, dass das Positionsaufnahmeelement mit dem Positionierkörper, insbesondere unter Bildung eines Formschlusses, derart zusammenwirkt, dass der Gehäusekörper gegen Kippbewegungen um quer, insbesondere senkrecht, zur Mittelachse der Kupplungskugel verlaufende Kippachsen relativ zum Kugelhals festgelegt ist.

Damit können durch das Positionsaufnahmeelement und den Positionierkörper alle Kippbewegungen des Gehäusekörpers eliminiert werden.

Alternativ oder ergänzend dazu ist vorgesehen, dass der Positionierkörper und das Positionsaufnahmeelement, insbesondere unter Bildung eines Formschlusses, derart zusammenwirken, dass der Gehäusekörper gegen eine Drehbewegung um eine parallel zur Mittelachse der Kupplungskugel oder mit der Mittelachse der Kupplungskugel einen Winkel von maximal 20° einschließende Drehachse drehfest festgelegt ist.

Damit besteht auch die Möglichkeit, durch das Zusammenwirken des Positionierkörpers mit dem Positionsaufnahmeelement des Gehäusekörpers in einfacher Weise gegen Drehbewegungen um die Drehachse am Kugelhals festzulegen.

Besonders günstig ist es dabei, wenn das Positionsaufnahmeelement klemmungsfrei mit dem Positionierkörper zusammenwirkt, das heißt, dass das Zusammenwirken nicht über eine Klemmverbindung geht, sondern lediglich über eine formschlüssige Wechselwirkung die Kippbewegungen um die Kippachsen und/oder die Drehbewegungen um die möglichen Drehachsen lediglich durch Formschluss eliminiert werden, ohne dass eine Klemmung zwischen den Positionsaufnahmeelement und den Positionierkörper notwendig ist.

Insbesondere ist dabei das Positionsaufnahmeelement so ausgebildet, dass diese mindestens eine Aufnahmefläche aufweist, die mit der mindestens einen Positionierfläche des mindestens einen Positionierkörpers in einer Lastenträgerhaltestellung zusammenwirkt.

Durch dieses Anlegen der Aufnahmefläche an der Positionierfläche lassen sich die formschlüssigen Fixierungen gegen Bewegungen um die Kippachse und/oder Drehungen um die Drehachse eliminieren.

Eine vorteilhafte Lösung sieht dabei vor, dass mit dem Gehäusekörper zwei Positionsaufnahmeelemente fest verbunden sind.

In diesen Fall ist vorzugsweise vorgesehen, dass beide Positionsaufnahmeelemente relativ zueinander starr angeordnet sind.

Ferner ist vorzugsweise vorgesehen, dass die beiden Positionsaufnahmeelemente relativ zum Gehäusekörper starr angeordnet sind.

Besonders günstig ist es, wenn das Positionsaufnahmeelement zwei aneinander zugewandte Aufnahmeflächen aufweist.

Prinzipiell wäre es denkbar, die Positionierkörper so auszubilden, dass sie die Lastenträgerhalteeinrichtung relativ zum Kugelhals in einer definiert ausgerichteten Stellung halten, jedoch nicht tragen, so dass beispielsweise die Lastenträgerhalteeinrichtung auf der Kupplungskugel ruht und von der Kupplungskugel getragen wird und die Positionierkörper, durch ein Tragen der Lastenträgerhalteeinrichtung seitens der Kupplungskugel nicht festgelegten Freiheitsgrade der Bewegung der Lastenträgerhalteeinrichtung relativ zur Kupplungskugel und zum Kugelhals auf eine definierte Ausrichtung der Lastenträgerhalteeinrichtung zu begrenzen.

Das Zusammenwirken des Positionierkörpers mit dem Positionsaufnahmeelement wurde im Zusammenhang mit den bisherigen Lösungen nicht näher spezifiziert.

Vorzugsweise ist vorgesehen, dass der jeweilige Positionierkörper mit seinem die Positionierfläche tragenden Bereich in einer Lastenträgerhaltestellung zwischen den Aufnahmeflächen des Positionsaufnahmeelements angeordnet ist.

Besonders vorteilhaft ist es, wenn das Positionsaufnahmeelement einander zugewandt verlaufende Aufnahmeflächen aufweist, zwischen welchen der Positionierkörper in der Lastenträgerhaltestellung angeordnet ist.

Darüber hinaus ist vorzugsweise vorgesehen, dass die Aufnahmeflächen des Positionsaufnahmeelements zwei einander zugewandte und ungefähr parallel zur Aufsetzrichtung verlaufende Führungsflächenbereiche aufweisen.

Derartige Führungsflächenbereiche ermöglichen eine drehfeste Festlegung der Lastenträgerhalteeinrichtung am Kugelhals mittels des Positionierkörpers und des Positionsaufnahmeelements.

In diesem Fall ist es beispielsweise vorgesehen, dass die Aufnahmeflächen, insbesondere die Führungsflächenbereiche, in der Lastenträgerhaltestellung den jeweiligen Positionierkörper mit geringem Spiel führen.

Um das Positionsaufnahmeelement auch an den Positionierkörpern abstützen zu können, ist vorzugsweise vorgesehen, dass mindestens eine der Aufnahmeflächen einen quer zur Aufsetzrichtung verlaufenden Stützflächenbereich aufweist.

Ein derartiger Stützflächenbereich schafft die Möglichkeit, auch die Last von der Lastenträgerhalteeinrichtung auf den Kugelhals über den Positionierkörper zu übertragen.

Besonders günstig ist es, wenn jede der Aufnahmeflächen einen quer zu der Aufsetzrichtung verlaufenden Stützflächenbereich aufweist.

Insbesondere ist es günstig, wenn die Stützflächenbereiche mit zunehmender Erstreckung in Aufsetzrichtung mit zunehmendem Abstand voneinander verlaufen, so dass die Stützflächenbereiche nicht nur dazu eingesetzt werden können, die Lastenträgerhalteeinrichtung an dem Positionierkörper abzustützen, sondern auch definiert relativ zum Positionierkörper auszurichten.

Die Stützflächenbereiche können dabei konisch oder parabolisch oder zylinderförmig oder kegelförmig zueinander verlaufen.

Eine vorteilhafte Lösung sieht vor, dass die Stützflächenbereiche bogenförmig zueinander verlaufen, zum Beispiel in Form von Parabelbögen oder Kreisbögen oder hyperbolischen Bögen.

Eine besonders günstige Lösung sieht vor, dass die Stützflächenbereiche in der Lastenträgerstellung den Gehäusekörper relativ zum Positionierkörper spielarm festlegen.

Hinsichtlich der Anordnung des Stabilisierungselements und des Positionsaufnahmeelements wurden bislang keine näheren Angaben gemacht.

So sieht eine konstruktiv günstige Lösung vor, dass das mindestens eine Positionsaufnahmeelement auf einer Seite des Kugelhalses liegt, wenn die Lastenträgerhalteeinrichtung in der Lastenträgerhaltestellung an dem Kugelhals angeordnet ist.

Eine andere zweckmäßige Lösung, insbesondere eine Lösung, bei welcher die Positionierflächen im Wesentlichen Führungsflächenbereiche aufweisen, sieht vor, dass in der Lastenträgerhaltestellung die beiden Positionierkörper mit ihren Positionierflächen zwischen den Aufnahmeflächen zweier Positionsaufnahmeelemente liegen.

Bei dieser Lösung besteht somit die Möglichkeit, durch Bewegen der Lastenträgerhalteeinrichtung in der Aufsetzrichtung und Aufsetzen derselben auf den Kugelhals mit der Kupplungskugel die Aufnahmeflächen mit den Positionierflächen in Wechselwirkung zu bringen, indem der Gehäusekörper mit den Positionsaufnahmeelemente einfach auf die Kupplungskugel und den Kugelhals mit dem Positionierkörper in der Aufsetzrichtung aufgesetzt wird, ohne das hierzu weitere Bewegungen der Lastenträgerhalteeinrichtung erforderlich sind.

Besonders günstig ist diese Lösung auch dann, wenn die beiden Positionierflächen der beiden Positionierkörper und/oder die beiden Aufnahmeflächen der beiden Positionsaufnahmeelemente Flächenabschnitte, insbesondere Verkeilflächenabschnitte aufweisen, die in einer quer zur Aufsetzrichtung verlaufenden Verkeilrichtung sich mit zunehmender Erstreckung in der Verkeilrichtung erweiternd oder verengend verlaufen.

Damit besteht die Möglichkeit, die Positionsaufnahmeelemente relativ zu den Positionierkörpern durch eine Bewegung quer zur Aufsetzrichtung in der Verkeilrichtung aneinander zur Anlage zu bringen und miteinander zu verkeilen, um dadurch eine spielarme Positionierung der Positionsaufnahmeelemente relativ zu den Positionierkörpern am Kugelhals zu erreichen und somit insgesamt auch den Gehäusekörper spielarm oder im Wesentlichen spielfrei relativ zu dem Kugelhals mit den Positionierkörpern positionieren zu können.

Im Zusammenhang mit der bisherigen Beschreibung der Lastenträgerhalteeinrichtung wurde lediglich darauf eingegangen, wie die Lastenträgerhalteeinrichtung relativ zum Kugelhals positionierbar ist.

Es wurden jedoch keine Ausführungen zur Fixierung der Lastenträgerhalteeinrichtung an dem Kugelhals gemacht.

So sieht eine vorteilhafte Lösung vor, dass die Lastenträgerhalteeinrichtung eine den Gehäusekörper am Kugelhals festlegende Fixiereinrichtung aufweist.

Eine derartige Fixiereinrichtung weist vorzugsweise ein Fixierelement auf, welches den Gehäusekörper relativ zum Kugelhals in der Lastenträgerhaltestellung fixiert.

Dabei kann das Fixierelement in unterschiedlicher Art und Weise wirksam werden.

Eine zweckmäßige Lösung sieht vor, dass das Fixierelement mit der Kupplungskugel oder dem Kugelhals derart zusammenwirkt, dass der Gehäusekörper relativ zur Kupplungskugel oder zum Kugelhals in der Aufsetzrichtung oder entgegengesetzt zur Aufsetzrichtung mit einer Fixierkraft beaufschlagt ist und sich somit nicht in entgegengesetzter Richtung zur Aufsetzrichtung vom Kugelhals wegbewegt.

Insbesondere ist dabei die Aufsetzkraft stets wirksam, solange die Lastenträgerhalteeinrichtung in der Lastenträgerhaltestellung und das Fixierelement in der Fixierstellung sind.

Eine weitere vorteilhafte Lösung sieht vor, dass das Fixierelement mit der Kupplungskugel oder dem Kugelhals derart zusammenwirkt, dass der Gehäusekörper relativ zur Kupplungskugel oder zum Kugelhals eine quer zur Aufsetzrichtung gerichtete und somit wirkende Verspannkraft erfährt, und ein Spiel zwischen der Kupplungskugelaufnahme und der Kupplungskugel und/oder zwischen dem Positionierkörper und dem Positionsaufnahmeelement reduziert oder entfernt.

Insbesondere ist dabei die Verspannkraft stets wirksam, solange die Lastenträgerhalteeinrichtung in der Lastenträgerhaltestellung und das Fixierelement in der Fixierstellung sind.

Die Erzeugung der Aufsetzrichtung und/oder der Verspannkraft erfolgt insbesondere durch ein Zusammenwirken des Fixierelements mit einer schräg oder gewölbt zur Aufsetzrichtung verlaufenden Fläche an der Kupplungskugel oder m Kugelhals, wobei die Fläche direkt am Kugelhals oder an einem auf dem Kugelhals sitzenden Körper, beispielsweise dem Positionierkörper angeordnet sein kann.

Eine erste vorteilhafte Lösung sieht dabei vor, dass das Fixierelement in einer Fixierstellung an dem Positionierkörper angreift und somit die Fixierung der Lastenträgerhalteeinrichtung am Kugelhals ebenfalls über den Positionierkörper erfolgt.

Insbesondere lässt sich dies dadurch realisieren, dass das Fixierelement den mindestens einen Positionierkörper auf einer in Aufsetzrichtung vorderen Seite hintergreift und somit in der Lage ist, dadurch die Lastenträgerhalteeinrichtung in Richtung der Aufsetzrichtung zu beaufschlagen.

Es ist aber auch denkbar, dass das Fixierelement an einer anderen Stelle am Kugelhals mit der Kupplungskugel angreift, beispielsweise an einer eigens dafür vorgesehenen Nase oder Vertiefung am Kugelhals.

Eine vorteilhafte Lösung sieht vor, dass das Fixierelement in einer Fixierstellung am Kugelhals oder an der Kupplungskugel angreift.

Dies ist insbesondere auch dadurch realisierbar, dass das Fixierelement eine Hinterschneidung am Kugelhals hintergreift oder in eine Vertiefung am Kugelhals eingreift oder die Kupplungskugel auf einer in Aufsetzrichtung vorderen, das heißt bei vertikaler Aufsetzrichtung von oben nach unten auf einer unteren Seite, hintergreift.

Ein derartiges Angreifen am Kugelhals oder an der Kupplungskugel in der Fixierstellung lässt sich insbesondere dadurch realisieren, dass das Fixierelement in der Fixierstellung in eine Kugelaufnahme des Gehäusekörpers hineinragt.

Um das Fixierelement zwischen einer Fixierstellung und einer Lösestellung bewegen zu können, ist vorzugsweise vorgesehen, dass das Fixierelement in einem Führungskanal zwischen der Fixierstellung und der Lösestellung bewegbar geführt ist.

Der Führungskanal ist bei einer besonders einfachen Lösung als Führungsbohrung des Gehäusekörpers realisiert.

Der Führungskanal verläuft dabei vorzugsweise quer zur Kugelaufnahme des Gehäusekörpers, so dass das Fixierelement in einfacher Weise in der Fixierstellung in die Kugelaufnahme des Gehäusekörpers hineinragen oder aus dieser in der Lösestellung zurückgezogen positioniert werden kann.

Hinsichtlich der Wirkungsweise des Fixierelements wurden im Zusammenhang mit den bisherigen Ausführungsformen keine weiteren Angaben gemacht.

So sieht eine vorteilhafte Lösung vor, dass das Fixierelement in einer Führungsrichtung zwischen einer Lösestellung und einer Fixierstellung bewegbar ist und dass das Fixierelement durch eine Betätigungseinrichtung in der Führungsrichtung bewegbar ist.

Das Fixierelement kann dabei in der unterschiedlichsten Art und Weise bewegbar sein.

Eine vorteilhafte Lösung sieht vor, dass das Fixierelement in einem Führungskanal zwischen der Fixierstellung und der Lösestellung bewegbar geführt ist.

Der Führungskanal kann in unterschiedlichster Art und Weise angeordnet sein.

Eine vorteilhafte Lösung sieht vor, dass der Führungskanal quer zur Kugelaufnahme verläuft.

Dabei kann das Fixierelement in unterschiedlichster Weise ausgebildet sein.

Eine Ausführung sieht vor, dass das Fixierelement als Fixierschraube ausgebildet ist.

Eine andere Lösung sieht vor, dass das Fixierelement als Fixierkörper, beispielsweise als Fixierkugel ausgebildet ist.

Eine weitere Lösung sieht vor, dass das Fixierelement als Fixierzapfen ausgebildet ist.

Eine weitere Lösung sieht vor, dass das Fixierelement als Fixierbügel ausgebildet ist, welcher beispielsweise an der Kupplungskugel anlegbar ist und diese zumindest teilweise umfasst.

Eine weitere vorteilhafte Lösung sieht vor, dass das Fixierelement als Fixierfinger ausgebildet ist, welcher quer, vorzugsweise radial zur Mittelachse bewegbar ist und beispielsweise an der Kupplungskugel anlegbar ist.

Eine weitere Lösung für eine Betätigungseinrichtung sieht vor, dass die Betätigungseinrichtung ein Kniehebelantrieb zum Bewegen des Fixierelements zwischen der Lösestellung und der Fixierstellung aufweist.

Vorzugsweise steht dabei der Kniehebelantrieb in der Fixierstellung in einer Übertotpunktstellung und hält das Fixierelement dabei in seiner Fixerstellung.

Dadurch ist eine vereinfachte Bedienung der Lastenträgerhalteeinrichtung beim Abheben möglich.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Seitenansicht eines Kraftfahrzeugs, insbesondere eines Personenkraftfahrzeugs mit einer in Arbeitsstellung stehenden Anhängekupplung und einer an der Anhängekupplung gehaltenen Lastenträgereinheit;
- Fig. 2: eine Ansicht ähnlich Fig. 1 mit einem vergrößert dargestellten Teil eines Kugelhalses der Anhängekupplung und einer ersten Ausführungsform einer an der Anhängekupplung fixierten Lastenträgerhalteeinrichtung in der Fixierstellung;
- Fig. 3: eine Draufsicht in Richtung eines Pfeils A in Fig. 1 auf ein erstes Ausführungsbeispiel des Kugelhalses ohne dass auf den Kugelhals eine Lastenträgerhalteeinrichtung aufgesetzt ist;
- Fig. 4: eine teilweise aufgebrochene Darstellung der ersten Ausführungsform der Lastenträgerhalteeinrichtung, aufgesetzt auf das erste Ausführungsbeispiel des Kugelhalses der Anhängekupplung;
- Fig. 5: eine Darstellung ähnlich Fig. 4 einer zweiten Ausführungsform der Lastenträgerhalteeinrichtung aufgesetzt auf das erste Ausführungsbeispiel des Kugelhalses;
- Fig. 6: eine Darstellung ähnlich Fig. 2 eines zweiten Ausführungsbeispiels des Kugelhalses und einer dritten Ausführungsform der Lastenträgerhalteeinrichtung;
- Fig. 7: eine Darstellung ähnlich Fig. 2 eines dritten Ausführungsbeispiels des Kugelhalses mit der ersten Ausführungsform der Lastenträgerhalteeinrichtung;
- Fig. 8: eine Darstellung ähnlich Fig. 2 eines vierten Ausführungsbeispiels des Kugelhalses mit der ersten Ausführungsform der Lastenträgerhalteeinrichtung;
- Fig. 9: eine Darstellung ähnlich Fig. 2 eines fünften Ausführungsbeispiels des Kugelhalses mit einer vierten Ausführungsform der Lastenträgerhalteeinrichtung;
- Fig. 10: eine perspektivische Darstellung der ersten Ausführungsform der Lastenträgerhalteeinrichtung;
- Fig. 11: einen Schnitt längs Linie 11-11 in Fig. 10 mit einer ersten Ausführung der erfindungsgemäßen Fixiereinrichtung;
- Fig. 12: einen Schnitt längs Linie 11-11 in Fig. 10 mit einer zweiten Ausführung der erfindungsgemäßen Fixiereinrichtung;
- Fig. 13: eine perspektivische Darstellung einer fünften Ausführungsform der Lastenträgerhalteeinrichtung mit einer dritten Ausführung der erfindungsgemäßen Fixiereinrichtung;
- Fig. 14: einen Schnitt längs Linie 14-14 in Fig. 13;
- Fig. 15: einen Schnitt längs Linie 15-15 in Fig. 14;
- Fig. 16: eine perspektivische Darstellung einer sechsten Ausführungsform der Lastenträgerhalteeinrichtung mit einer vierten Ausführung der erfindungsgemäßen Fixiereinrichtung;
- Fig. 17: einen Schnitt längs Linie 17-17 in Fig. 16;
- Fig. 18: einen Schnitt ähnlich Fig. 11 durch eine siebte Ausführungsform der Lastenträgerhalteeinrichtung mit einer fünften Ausführung der erfindungsgemäßen Fixiereinrichtung;
- Fig. 19: eine perspektivische Darstellung einer achten Ausführungsform der Lastenträgerhalteeinrichtung mit einer sechsten Ausführung der erfindungsgemäßen Fixiereinrichtung;
- Fig. 20: einen Schnitt längs Linie 20-20 in Fig. 19;
- Fig. 21: eine perspektivische Darstellung eines sechsten Ausführungsbeispiels des Kugelhalses mit einer neunten Ausführungsform der Lastenträgerhalteeinrichtung und einer siebten Ausführung der erfindungsgemäßen Fixiereinrichtung;
- Fig. 22: einen Schnitt längs Linie 22-22 in Fig. 21;
- Fig. 23: einen Längsschnitt durch das erste Ausführungsbeispiel des Kugelhalses mit einer zehnten Ausführungsform der Lastenträgerhalteeinrichtung und einer achten Ausführung der erfindungsgemäßen Fixiereinrichtung.

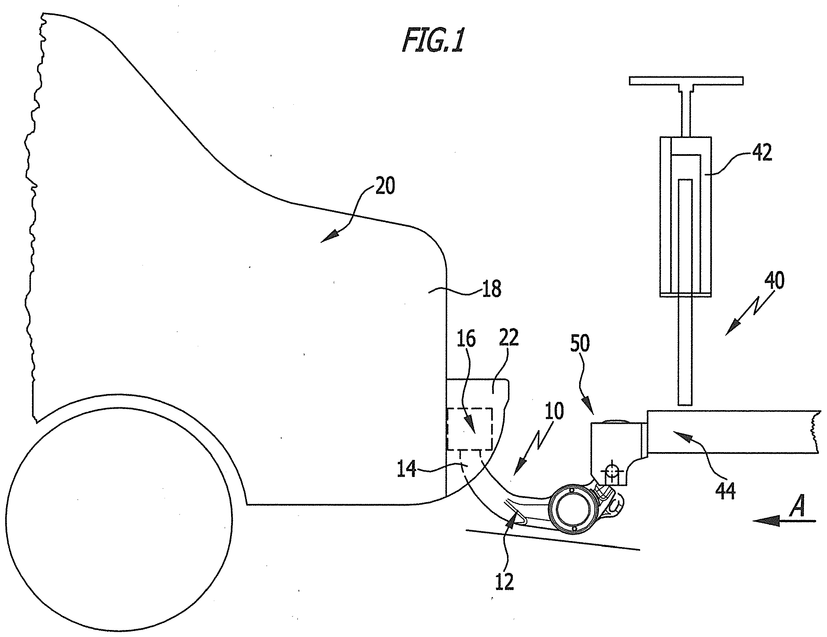

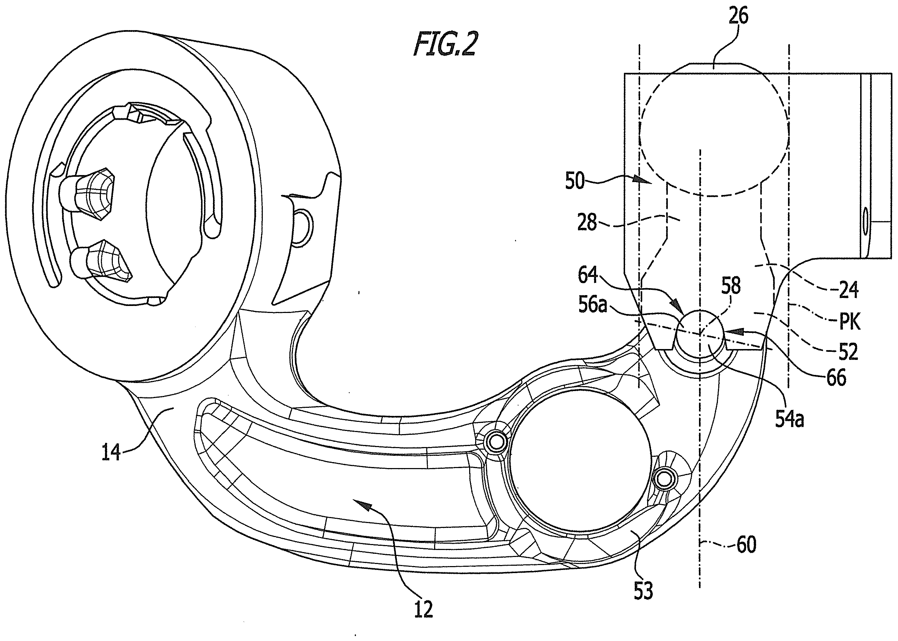

Ein in Fig. 1 und 2 dargestelltes Ausführungsbeispiel einer als Ganzes mit 10 bezeichneten Anhängekupplung umfasst einen Kugelhals 12, welcher an einem ersten Ende 14 mit einem Kugelhalsträger 16 verbunden ist, welcher seinerseits fest an einer Heckpartie 18 einer als Ganzes mit 20 bezeichneten Kraftfahrzeugkarosserie eines Kraftfahrzeugs gehalten ist, wobei der Kugelhalsträger 16 vorzugsweise verdeckt durch eine hintere Stoßfängereinheit 22 fest mit der Heckpartie 18 verbunden ist.

Der Kugelhalsträger 16 kann beispielsweise einen üblichen sich unter der Stoßfängereinheit 22 und parallel zu dieser sowie quer zu einer Längsrichtung der Kraftfahrzeugkarosserie 20 erstreckenden Querträger umfassen, welcher seinerseits mit der Heckpartie 18 verbunden ist, und außerdem entweder eine Aufnahme, an welcher Kugelhals 12 mit dem Ende 14 fest oder lösbar gehalten ist, oder ein Schwenklager, mit welchem der Kugelhals 12 um eine oder mehrere Achsen relativ zu der Heckpartie 18 zwischen einer Arbeitsstellung, dargestellt in Fig. 1, und einer nicht dargestellten Ruhestellung verschwenkbar ist, wobei der Kugelhals 12 sich in der Ruhestellung ungefähr parallel zur Stoßfängereinheit 22 erstreckt und von der hinteren Stoßfängereinheit 22 weitgehend verdeckt zwischen dieser und der Heckpartie 18 der Kraftfahrzeugkarosserie 20 angeordnet ist.

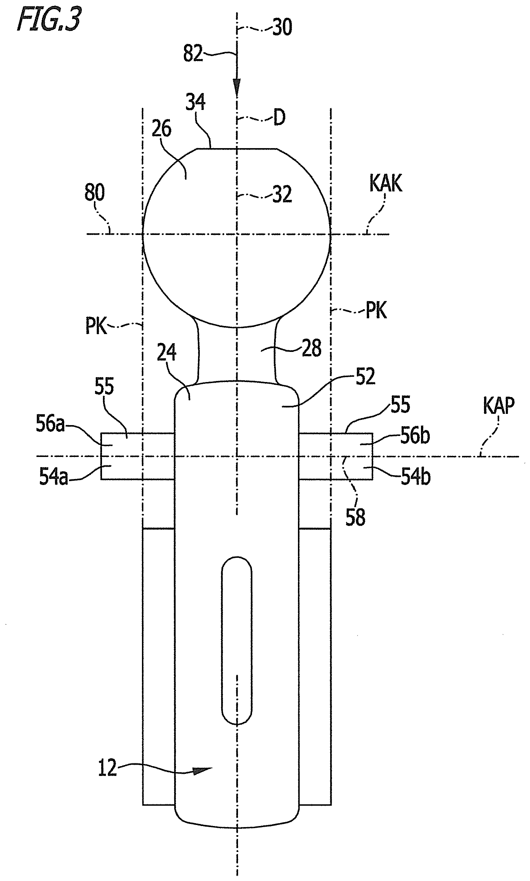

Wie in Fig. 2 und Fig. 3 dargestellt, ist der Kugelhals 12 zwischen seinem ersten Ende 14 und dem diesem gegenüberliegenden zweiten Ende 24 abgekröpft, so dass das Ende 24 sich in der Arbeitsstellung von einer Fahrbahn weg erstreckt, und trägt eine als Ganzes mit 26 bezeichnete Kupplungskugel, wobei zwischen der Kupplungskugel 26 und dem Ende 24 eine als Kugelansatz 28 bezeichnete Einschnürung vorgesehen ist, welche sich an das Ende 24 in Fortsetzung eines Verlaufs des Kugelhalses 12 anschließt und über welche die Kupplungskugel 26 mit dem zweiten Ende 24 des Kugelhalses 12 verbunden ist.

Die Kupplungskugel 26 dient dabei üblicherweise zum Anhängen eines Anhängers, wobei ein Anhänger eine Zugkugelkupplung aufweist, welche die Kupplungskugel 24 übergreifend mit dem Kugelhals 12 verbindbar ist.

In seiner Arbeitsstellung, dargestellt in Fig. 1, 2 und 3, ist der Kugelhals 12 symmetrisch zu einer vertikalen Längsmittelebene 30 ausgebildet, in gleicher Weise wie auch die Kupplungskugel 26, wobei die Längsmittelebene 30 nicht nur die Längsmittelebene 30 des Kugelhalses 12 und der Anhängekupplung 10 ist, sondern in der Arbeitsstellung der Anhängekupplung auch mit der vertikalen Längsmittelebene 30 der Heckpartie 18 und der Kraftfahrzeugkarosserie 20 zusammenfällt.

Dabei liegt insbesondere eine Mittelachse 32 der Kupplungskugel 26 in der vertikalen Längsmittelebene 30, wobei die Mittelachse 32 der Kupplungskugel 26 dadurch festgelegt ist, dass sie gleichzeitig eine Mittelachse 32 des Kugelansatzes 28 darstellt und/oder außerdem dadurch festgelegt ist, dass sie mittig und senkrecht zu einer Abflachung 34 der Kupplungskugel 26 verläuft, welche an der Kupplungskugel 26 auf einer dem Kugelansatz 28 gegenüberliegenden Seite vorgesehen ist, so dass die Form der Kupplungskugel 26 einerseits im Bereich des Kugelansatzes 28 und andererseits im Bereich der Abflachung 34 von einer um einen auf der Mittelachse 32 liegenden Kugelmittelpunkt 36 verlaufenden vollständigen Kugelfläche 38 abweicht.

Wie in Fig. 1 und 2 dargestellt, kann die Anhängekupplung 10 nicht nur dazu dienen, einen Anhänger mit der Kraftfahrzeugkarosserie 20 zu verbinden, sondern auch dazu, einen als Ganzes mit 40 bezeichneten Lastenträger an der Kraftfahrzeugkarosserie 20 zu fixieren.

Der Lastenträger 40 dient dabei beispielsweise dazu, Fahrräder 42 zu transportieren, es ist aber auch denkbar, mit dem Lastenträger 40 andere Lasten beliebiger Art zu transportieren.

Der Lastenträger 40 umfasst eine Lastenträgerbasis 44, beispielsweise ausgebildet in Form eines Grundrahmens zur Aufnahme der verschiedenen Lasten, welcher mit einer Lastenträgerhalteeinrichtung 50 versehen ist, mit welcher der Lastenträger 40 an dem Kugelhals 12 festlegbar ist.

Wie in den Fig. 2 und 3 dargestellt, ist bei einem ersten Ausführungsbeispiel der Kugelhals 12 in einem unmittelbar an das Ende 24 und den Kugelansatz 28 angrenzenden Kugelhalsabschnitt 52 mit über diesen seitlich überstehenden Positionierkörpern 54a und 54b versehen, welche beispielsweise durch an den Kugelhalsabschnitt 52 angeformte und seitlich über den Kugelhalsabschnitt 52 überstehende massive Zapfen 56a, 56b, insbesondere mit einer zylindrischen Mantelfläche, ausgebildet sind.

In dem Fall, in dem der Kugelhals mit einer Aufnahme 53 für eine Steckdose versehen ist, liegt der Kugelhalsabschnitt 52 zwischen der Aufnahme 53 und dem Ende 24.

Ferner erstreckt sich der Kugelhalsabschnitt 52 vorzugsweise ausgehend von dem Ende 24 entlang des Kugelhalses 12 maximal über eine Distanz die einem 1,5-fachen des Durchmessers der Kugelfläche 38 der Kupplungskugel 26 entspricht.

Vorzugsweise erstreckt sich der Kugelhalsabschnitt 52 ausgehend von dem Ende 24 lediglich über eine Distanz, die dem Durchmesser der Kugelfläche 38 entspricht.

Dabei sind die massiven Zapfen 56a und 56b symmetrisch zu der Längsmittelebene 30, angeordnet und erstrecken sich ausgehend von dem Kugelhalsabschnitt auch symmetrisch zu der vertikalen Längsmittelebene 30.

Alternativ zum Anformen der Positionierkörper 54 an den Kugelhalsabschnitts 52 besteht aber auch die Möglichkeit, die Positionierkörper 54 durch einen den Kugelhalsabschnitt 52 in einer Bohrung durchsetzenden Stift, beispielsweise mit einer zylindrischen Mantelfläche, zu realisieren, welcher mit seinen beiden Enden dann die Zapfen 56a, b bildet.

Vorzugsweise sind die Positionierkörper 54, insbesondere die Zapfen 56, so ausgebildet, dass die Form der Positionierkörper 54a und 54b jeweils spiegelsymmetrisch zur Längsmittelebene 30 gestaltet ist.

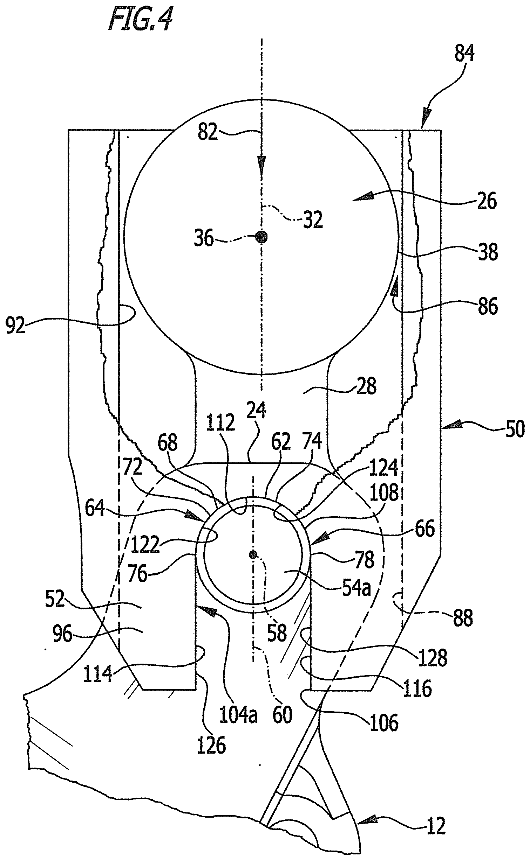

Wie insbesondere in Fig. 3 und 4 dargestellt, erstrecken sich die Positionierkörper 54a und 54b mit ihrer Längsachse 58 in einer Erstreckungsrichtung 59, die quer, vorzugsweise senkrecht, zur Längsmittelebene 30 verläuft.

Die Längsachse 58 liegt beispielsweise in einer sich quer, vorzugsweise senkrecht zur Längsmittelebene 30 erstreckenden insbesondere vertikalen Querebene 60, die sich außerdem parallel zur Mittelachse 32 der Kupplungskugel 26 verläuft, insbesondere durch die Mittelachse 32 der Kupplungskugel 26 hindurch verläuft.

Die Positionierkörper 54 umfassen beiderseits auf einer Außenseite 55 derselben liegende erste Positionierflächen 64, 66, die parallel zur Längsachse 58 und zur Erstreckungsrichtung 59 verlaufen.

Insbesondere erstrecken sich die ersten Positionierflächen 64, 66 ausgehend von einer auf der Außenseite liegenden und der Kupplungskugel 26 zugewandten Scheitellinie 62.

Die Scheitellinie 62 liegt dabei insbesondere in der Querebene 60, welche einerseits durch die Kupplungskugel 26 verläuft und andererseits die Positionierkörper 54a und 54b insbesondere mittig schneidet, wie in Fig. 3 und 4 dargestellt.

Auf gegenüberliegenden Seiten der Querebene 60 liegen die ersten Positionierflächen 64 und 66 der Positionierkörper 54a und 54b, die sich vorzugsweise parallel oder ein einem Winkel von bis zu 20° zu der Längsachse 58 der Positionierkörper 54a, 54b erstrecken, wobei die Positionierflächen 64 und 66 Teilflächen einer als Ganzes mit 68 bezeichneten geometrischen Außenmantelfläche der Positionierkörper 54a und 54b sind, welche den Kugelhalsabschnitt 52 schneidet.

Im Fall der Ausbildung der Positionierkörper 54a und 54b in Form zylindrischer Zapfen stellt die Außenmantelfläche 68 der Positionierkörper 54a und 54b eine Zylindermantelfläche dar, wobei die Längsachse 58 eine Zylinderachse zu dieser Zylindermantelfläche bildet.

Die Positionierflächen 64 und 66 erstrecken dabei ausgehend von der Scheitellinie 62 beiderseits vorzugsweise in zunehmendem Abstand von der insbesondere vertikalen Querebene 60, wobei die ersten Positionierflächen 62 und 64 sich zunächst quer zur Querebene 60 und auch quer zur Längsmittelebene 30 und sich mit zunehmendem Abstand von der Kupplungskugel 26 auch mit zunehmendem Abstand von der Querebene 60 verlaufende Positionierflächenbereiche 72 und 74 aufweisen, die in näherungsweise parallel oder parallel zu der Querebene 60 verlaufende Führungsflächenbereiche 76, 78 der ersten Positionierflächen 64 und 66 übergehen.

Dabei gehen die Positionierflächenbereiche 72 und 74 beispielsweise stufenlos in die Führungsflächenbereiche 76 bzw. 78 über.

Bei den in den Fig. 2 bis 4 dargestellten ersten Ausführungsbeispiel des erfindungsgemäßen Kugelhalses 12 liegen die Positionierkörper 54a und 54b derart nahe an dem Kugelansatz 28, dass ein Abstand der Scheitellinie 62 der Positionierkörper 54a, b von dem Ende 24 des Kugelhalses 12, an welchem der Kugelansatz 28 beginnt, kleiner ist als das 1,5-fache der Ausdehnung des Kugelansatzes 28 zwischen dem zweiten Ende 24 und der Kupplungskugel 26.

Ferner ist insbesondere der Abstand der Positionierkörper 54a und 54b von einer durch den Kugelmittelpunkt 36 und senkrecht zur Mittelachse 32 verlaufenden Äquatorebene 80 der Kupplungskugel 26 kleiner als der 1,5-fache Durchmesser der Kugelfläche 38 der Kupplungskugel 26.

Insbesondere liegen die ersten Positionierflächen 64, 66 mit den Positionierflächenbereichen 72, 74 und der Führungsflächenbereiche 76, 78 außerhalb einer Projektionskontur PK, das heißt auf einer dem Kugelhalsabschnitt 52 abgewandten Seite der Projektionskontur PK, die durch Projektion der Kupplungskugel auf den Positionierkörper 54, insbesondere dessen Außenfläche entsteht.

Somit liegt insbesondere der Kugelhalsabschnitt 52, der die Positionierkörper 54a, 54b trägt, innerhalb der Projektionskontur PK, und die Positionierkörper 54a, 54b erstrecken sich von diesem Kugelhalsabschnitt 52 ausgehend bis zu den ersten Positionierflächen 64, 66.

Dabei erfolgt die Projektion parallel zu einer Aufsetzrichtung 82, in welcher die Lastenträgerhalteeinrichtung 50 auf die Kupplungskugel 26 und den Kugelhals 12 aufsetzbar ist.

Die Aufsetzrichtung 82 verläuft vorzugsweise ungefähr parallel, insbesondere parallel zur Mittelachse 32.

Unter ungefähr parallel ist dabei zu verstehen, dass der Winkel zwischen der Aufsetzrichtung 82 und der Mittelachse 32 maximal 10° beträgt.

Auf den vorstehend beschriebenen Kugelhals 12, welcher an dem zweiten Ende 24 die Kupplungskugel 26 und im nahe dem zweiten Ende 24 liegenden Kugelhalsabschnitt 52 die Positionierkörper 54a und 54b trägt, ist eine erste Ausführungsform der Lastenträgerhalteeinrichtung 50 aufsetzbar, wobei das Aufsetzen der Lastenträgerhalteeinrichtung 50 in der Aufsetzrichtung 82 erfolgt, welche insbesondere parallel zur Längsmittelebene 30 und ungefähr parallel zur Mittelachse 32 verläuft.

Unter dem ungefähr parallelem Verlauf der Aufsetzrichtung 82 ist zu verstehen, dass ein maximaler Winkel zwischen der Mittelachse 32 der Kupplungskugel 26 und der Aufsetzrichtung 82 weniger als 30° betragen soll, so dass die Aufsetzrichtung parallel und/oder schräg zur Mittelachse 32 oder auch gekrümmt verlaufen kann.

Die Lastenträgerhalteeinrichtung 50 weist ihrerseits einen Gehäusekörper 84 auf, in welchem eine Kugelaufnahme 86 für die Kupplungskugel 26 vorgesehen ist, wobei die Kugelaufnahme 86 ausgehend von einer Aufnahmeöffnung 88 des Gehäusekörpers 84 eine sich in den Gehäusekörper 84 hineinerstreckende zylindrische Kugelführungsfläche 92.

Der Gehäusekörper 84 ist außerdem mit Halteelementen 96 versehen, wobei die Halteelemente 96 jeweils ein Positionsaufnahmeelement 104 aufweisen, die mit jeweils einem der Positionierkörper 54 zusammenwirkt.

Die Halteelemente 96 stellen insbesondere eine starre Verbindung mit dem Gehäusekörper 84 her, so dass das Positionsaufnahmeelement 104 sowohl relativ zum Gehäusekörper 84 als auch relativ zueinander starr angeordnet sind.

Das in Fig. 4 dargestellte Positionsaufnahmeelement 104a, welches mit dem Positionierkörper 54a zusammenwirkt, erstreckt sich beispielsweise ausgehend von einer Aufnahmeöffnung 106 bis zu einem der Aufnahmeöffnung 106 gegenüberliegenden Aufnahmegrund 108.

Das Positionsaufnahmeelement 104 umfasst sich ausgehend von der Aufnahmeöffnung 106 bis in den Aufnahmegrund 108 hinein erstreckende Aufnahmeflächen 114 und 116, welche im Bereich des Aufnahmegrunds 108 als Stützflächenbereiche 122 und 124 ausgebildet sind, die in einer Richtung entgegengesetzt zur Aufsetzrichtung 82 aufeinanderzu verlaufen und beispielsweise im Bereich einer Grundlinie 112 des Aufnahmegrunds 108 ineinander übergehen oder im Abstand voneinander enden können.

Ferner umfassen die Aufnahmeflächen 114 und 116 im Anschluss an die Stützflächenbereiche 122 und 124 bis zur Aufnahmeöffnung 106 verlaufende Führungsflächenbereiche 126 und 128, die insbesondere parallel zur Aufsetzrichtung 82 verlaufen.

Die Führungsflächenbereiche 126 und 128 dienen dabei dazu, den durch die Aufnahmeöffnung 106 in die Positionsaufnahmeelemente 104 eintretenden Positionierkörper 54 dadurch zu führen, dass sich diese an die Führungsflächenbereiche 76 und 78 der Positionierkörper 54 anlegen und so die Lastenträgerhalteeinrichtung 50 beim Aufsetzen in der Aufsetzrichtung 82 führen, während die Stützflächenbereiche 122 und 124 der Positionsaufnahmeelemente 104 so gestaltet sind, dass sich diese möglichst flächenhaft an die Positionierflächenbereiche 72 und 74 der Positionierflächen 64 und 66 der Positionierkörper 54 anlegen.

Somit sitzt bei der ersten Ausführungsform der erfindungsgemäß ausgebildeten Lastenträgerhalteeinrichtung 50 die gesamte Last des Lastenträgers 40 auf den Positionierkörpern 54a und 54b, nämlich dadurch, dass einerseits die Stützflächenbereiche 122 und 124 der Positionsaufnahmeelemente 104 an den Positionierflächenbereichen 72 und 74 der Positionierkörper 54 möglichst flächenhaft anliegen.

Außerdem bewirkt der sich in der Aufsetzrichtung 82 erweiternde Verlauf der Stützflächenbereiche 122 und 124 und der sich zumindest näherungsweise sich identisch in Aufsetzrichtung erweiternde Verlauf der Positionierflächenbereiche 71 und 74, dass die Positionsaufnahmeelemente 104 relativ zu den Positionierkörpern 54 eine exakte Ausrichtung quer zur Aufsetzrichtung 82 und quer zur Querebene 60 erfahren.

Andererseits dienen die Führungsflächenbereiche 126 und 128 die Positionsaufnahmeelemente 104 dazu, den Gehäusekörper 84 beim Aufsetzen in der Aufsetzrichtung 82 an dem Positionierkörper 54, insbesondere den Führungsflächenbereichen 76 und 78 desselben zu führen, so dass die Positionsaufnahmeelemente 104 mit den Stützflächenbereichen 122 und 124 an den Positionierflächenbereichen 72 und 74 der Positionierkörper 54 zur Anlage kommen.

Bei dem Aufsetzen des Gehäusekörpers 84 auf den Kugelhals 12 mit der Kupplungskugel 26 erfolgt zuerst ein Einführen der Kupplungskugel 26 durch die Aufnahmeöffnung 88 in die Kugelaufnahme 86, wobei die Kugelführungsflächen 92 an der Kugelfläche 38 der Kupplungskugel 26 mit Spiel anliegen und die Kupplungskugel 26 beim Hineinbewegen in die Kugelaufnahme 86 in Richtung der Endfläche 94 führen, so lange, bis die Positionsaufnahmeelemente 104 mit ihren Aufnahmeöffnungen 106 die Positionierkörper 54 erreichen und dann die Positionierkörper 54 in die Positionsaufnahmeelemente 104 soweit hinwegbewegt werden, bis die Stützflächenbereiche 122 und 124 die Positionsaufnahmeelemente 104 an den Positionierflächenbereichen 72 und 74 der Positionierkörper 54 anliegen, so dass die Lastenträgerhaltestellung erreicht ist.

In dieser Lastenträgerhaltestellung der ersten Ausführungsform der Lastenträgerhalteeinrichtung 50 wird die gesamte Last von den Positionsaufnahmeelementen 104 auf die Positionierkörper 54 und von diesen auf den Kugelhals 12 übertragen, während die Kupplungskugel 26 lediglich an den Kugelführungsflächen 92 anliegt und somit eine Abstützung des Gehäusekörpers 84 relativ zum Kugelhals 12 gegen ein Kippen des Gehäusekörpers 84 um die Positionierkörper 54, insbesondere um eine durch die quer zur Mittelachse 32 verlaufenden Längsachsen 58 derselben gebildete Kippachse KAP, abstützt.

Außerdem verhindert das beschriebene Zusammenwirken der Positionierkörper 54 mit den Positionsaufnahmeelementen 104 ein Drehen des Gehäusekörpers 84 um eine Drehachse D, die ungefähr parallel zur Aufsetzrichtung 82 verläuft.

Dabei ist unter einem ungefähr parallelen Verlauf zur Aufsetzrichtung 82 ein Verlauf der Drehachse D zu verstehen, bei welchem die Drehachse D mit der Aufsetzrichtung einen Winkel von maximal 30° einschließt.

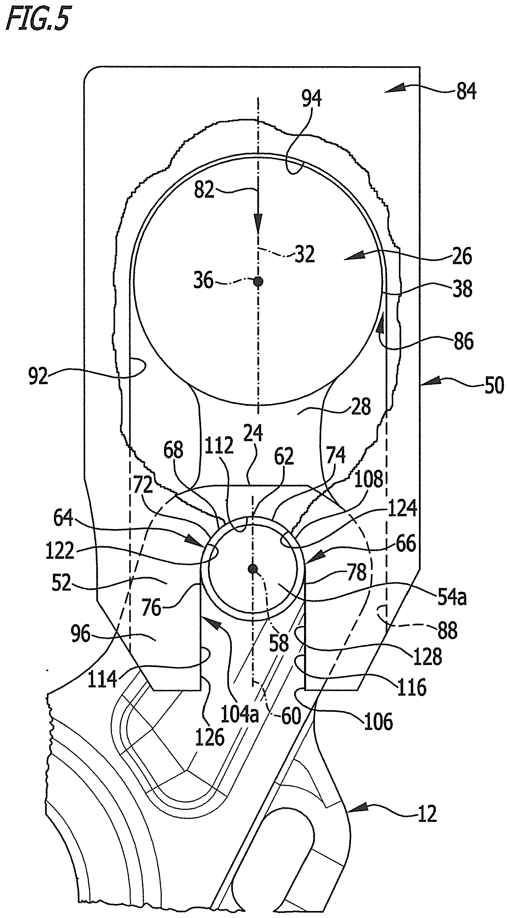

Alternativ ist es aber auch bei einer zweiten in Fig. 5 dargestellten Ausführungsform denkbar, eine der Aufnahmeöffnung 88 gegenüberliegend angeordnete Endfläche 94 der Kugelaufnahme 86 Endfläche 94 beispielsweise als konische oder als Kugelkappenfläche auszubilden und den Gehäusekörper 84 mit den Stabilisierungselementen 96 und den Positionsaufnahmeelementen 104 so auszubilden, dass die gesamte Last des Lastenträgers 40 von der Endfläche 94, auf die Kupplungskugel 26 übertragen wird und die Positionierkörper 54 lediglich dazu dienen, den Gehäusekörper 84 gegen ein allseitiges Verkippen um die Kupplungskugel 26 durchsetzende und quer zur Mittelachse 32 verlaufende Kippachsen KAK abzustützen, wobei in diesem Fall primär die Führungsflächenbereiche 126 und 128 durch Anliegen an den Führungsflächenbereichen 76 und 78 der Positionierkörper 54 einerseits ein Kippen des Gehäusekörpers 84 um die Kupplungskugel 26 verhindern und andererseits ein Drehen des Gehäusekörpers 84 um eine Drehachse D verhindern, die ungefähr parallel zur Aufsetzrichtung 82 verläuft, während die Stützflächenbereiche 122 und 124 der Aufnahmeflächen 114 und 116 beispielsweise einseitig, das heißt auf einer Seite des Kugelhalses 12 oder einer Seite der Querebene 60, auf den entsprechenden Positionierflächenbereichen 72 und 74 der Positionierflächen 64 und 66 der Positionierkörper 54 aufliegen können, um eine zusätzliche Abstützung zu bewirken.

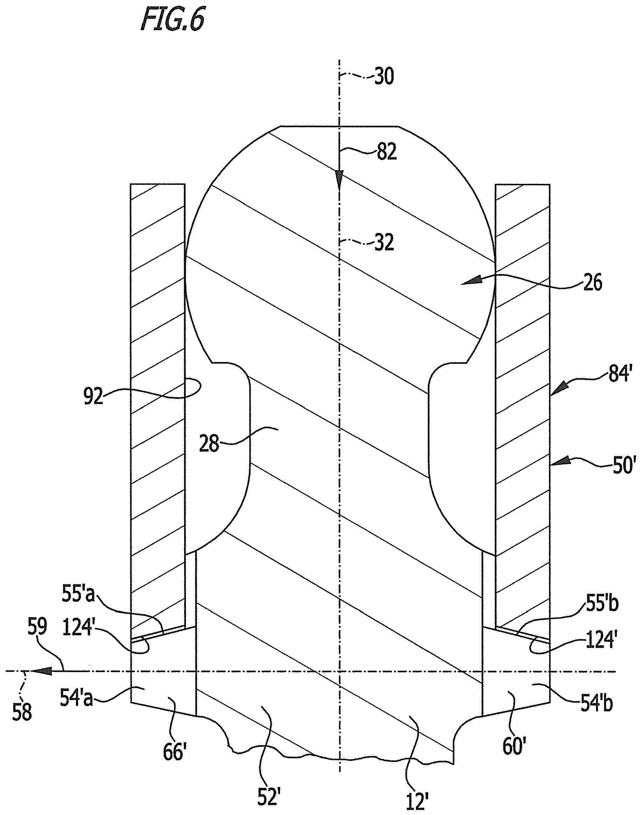

Bei einem zweiten Ausführungsbeispiel eines erfindungsgemäßen Kugelhalses, dargestellt in Fig. 6, sind die Positionierkörper 54'a und 54'b so ausgebildet, dass deren Außenflächen 55'a, 55'b nicht zylindrisch zur Längsachse 58 verlaufen, sondern mit zunehmender Erstreckung in der Erstreckungsrichtung 59 vom Kugelhalsabschnitt 52' weg sich konisch verjüngen, so dass die Außenflächen 55'a und 55'b mit zunehmendem Abstand von dem Kugelhalsabschnitt 52' in der Erstreckungsrichtung 59 in geringerem radialem Abstand von der Längsachse 58 verlaufen.

Dies bewirkt, dass die auf diesen durch die Außenflächen 55'a und 55'b gebildeten Positionierflächen 64' und 66' aufsitzenden Stützflächenbereiche 122' und 124' einer dritten Ausführungsform der erfindungsgemäßen Lastenträgerhalteeinrichtung eine zusätzlich zur Abstützung noch eine parallel zur Erstreckungsrichtung 59 gerichtete Kraft erfahren und dadurch eine Zentrierung des Gehäusekörpers 84 relativ zur vertikalen Längsmittelebene 30 erfolgt, die zu einer Verbesserung der Fixierung des Gehäusekörpers 84' am Kugelhals 12' führt, insbesondere dann, wenn die Stützflächenbereiche 122' und 124' an den konischen Verlauf der Außenflächen 55'a und 55'b der Positionierkörper 54'a und 54'b angepasst sind.

Eine derartige Ausbildung der Positionierkörper 54'a und 54'b verbessert somit die Ausrichtung des Gehäusekörpers 84' oder Zentrierung des Gehäusekörpers 84' relativ zur vertikalen Längsmittelebene 30 im Bereich der Positionierkörper 54'a und 54'b und führt somit zu einer noch spielfreieren Fixierung des Gehäusekörpers 84' an dem Kugelhals.

Im Übrigen sind bei dieser Lösung und zwar einer Kombination des zweiten Ausführungsbeispiels des erfindungsgemäßen Kugelhalses 12' und der dritten Ausführungsform der erfindungsgemäßen Lastenträgerhalteeinrichtung mit dem Gehäusekörper 84', diejenigen Elemente, die mit denen der voranstehenden Kombination aus Kugelhals und Gehäusekörper identisch sind, mit denselben Bezugszeichen versehen, so dass hinsichtlich der Beschreibung vollinhaltlich auf die Ausführungen zu dieser Kombination verwiesen werden kann.

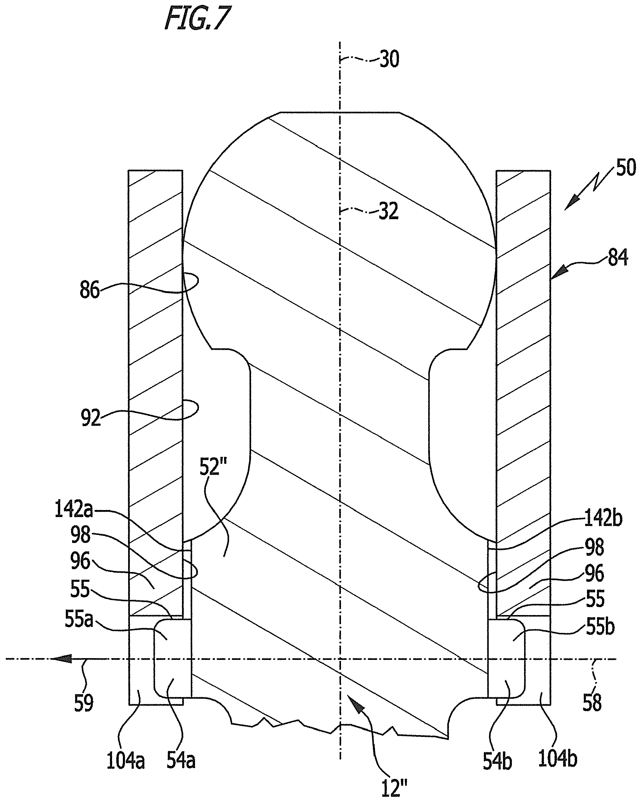

Bei einem dritten Ausführungsbeispiel eines erfindungsgemäßen Kugelhalses 12", dargestellt in Fig. 7, ist der Gehäusekörper 84 in gleicher Weise ausgebildet wie bei der ersten Ausführungsform, so dass hinsichtlich der Beschreibung desselben vollinhaltlich zu diesem Ausführungsbeispiel Bezug genommen werden kann.

Im Gegensatz zum ersten Ausführungsbeispiel sind den mit dem ersten Ausführungsbeispiel identischen Positionierkörpern 54a und 54b zweite Positionierflächen 142a und 142b zugeordnet, die senkrecht zu den Außenflächen 55a und 55b der ersten Positionierkörper 54a und 54b verlaufen und beispielsweise parallel zu der vertikalen Längsmittelebene 30.

Diese zusätzlichen zweiten Positionierflächen 142a, 142b sind an den Abstand der Halteelemente 96 voneinander angepasst und liegen an dem Kugelhalsabschnitt 52 zugewandten Innenseiten 98 der Halteelemente 96 an, so dass dadurch die Halteelemente 96 durch die zweiten Positionierflächen 142a, 142b gegen Querbewegungen zur vertikalen Längsmittelebene 30 relativ zum Kugelhalsabschnitt 52" fixiert sind.

Durch das Zusammenwirken der ersten Positionierflächen 64 und 66 der Positionierelemente 54a und 54b in Verbindung mit den zweiten Positionierflächen 142a, 142b lässt somit die Lastenträgerhalteeinrichtung 50 im Bereich der ersten Positionierelemente 54a, 54b sowohl gegen Bewegungen parallel zur Längsmittelebene 30 durch das Zusammenwirken der Positionierkörper 54a und 54b mit den Positionsaufnahmeelementen 104a und 104b als auch gegen Bewegungen quer zur vertikalen Längsmittelebene 30 durch das Zusammenwirken der zweiten Positionierflächen 142a, 142b mit den Innenseiten 98 der Halteelemente 96 zuverlässig festlegen.

Dabei ist die Lastenträgerhalteeinrichtung 50 in gleicher Weise ausgebildet, wie bei der ersten Ausführungsform.

Im Übrigen sind auch all diejenigen Elemente, die mit denen des ersten Ausführungsbeispiels identisch sind, mit denselben Bezugszeichen versehen, so dass hinsichtlich der Beschreibung derselben vollinhaltlich auf das erste Ausführungsbeispiel Bezug genommen werden kann.

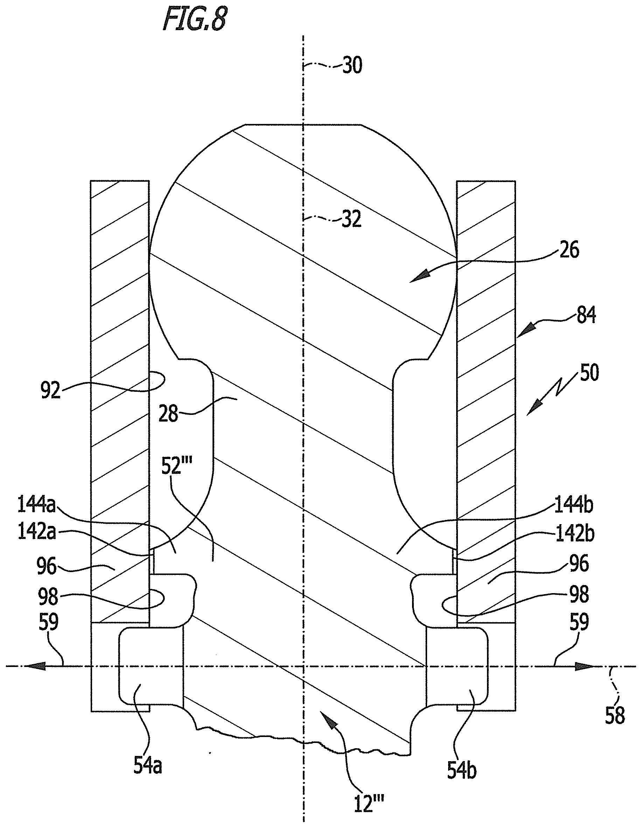

Bei einer weiteren Lösung, dargestellt in Fig. 8, sind ebenfalls diejenigen Elemente, die mit denen des ersten Ausführungsbeispiels des Kugelhalses 12 identisch sind, mit denselben Bezugszeichen versehen, so dass hinsichtlich der Beschreibung vollinhaltlich auf die Ausführungen zum ersten Ausführungsbeispiel verwiesen werden kann.

Im Gegensatz zum ersten Ausführungsbeispiel und zum dritten Ausführungsbeispiel des Kugelhalses 12 sind die dem vierten Ausführungsbeispiel die zweiten Positionierflächen 142a und 142b an zweiten Positionierkörpern 144a und 144b angeordnet, die parallel zur Erstreckungsrichtung 59 der ersten Positionierkörper 54a und 54b von dem Kugelhalsabschnitt 52 abstehen, jedoch im Abstand von den ersten Positionierkörpern 54a und 54b angeordnet sind und beispielsweise zwischen den ersten Positionierkörpern 54a und 54b und dem Kugelansatz 28 liegen.

Auch bei diesem vierten Ausführungsbeispiel liegen die zweiten Positionierflächen 142a und 142b an den Innenseiten 98 der Halteelemente 96 an und führen somit zu einer definierten Positionierung der Halteelemente 96 relativ zur vertikalen Längsmittelebene 30, so dass die Halteelemente 96 mit den Stützflächenbereichen 122 und 124 nicht quer zur vertikalen Längsmittelebene 30 auf den ersten Positionierkörpern 54a und 54b abgestützt sind, sondern gegen derartige Bewegungen durch die zweiten Positionierflächen 142a und 142b festgelegt sind.

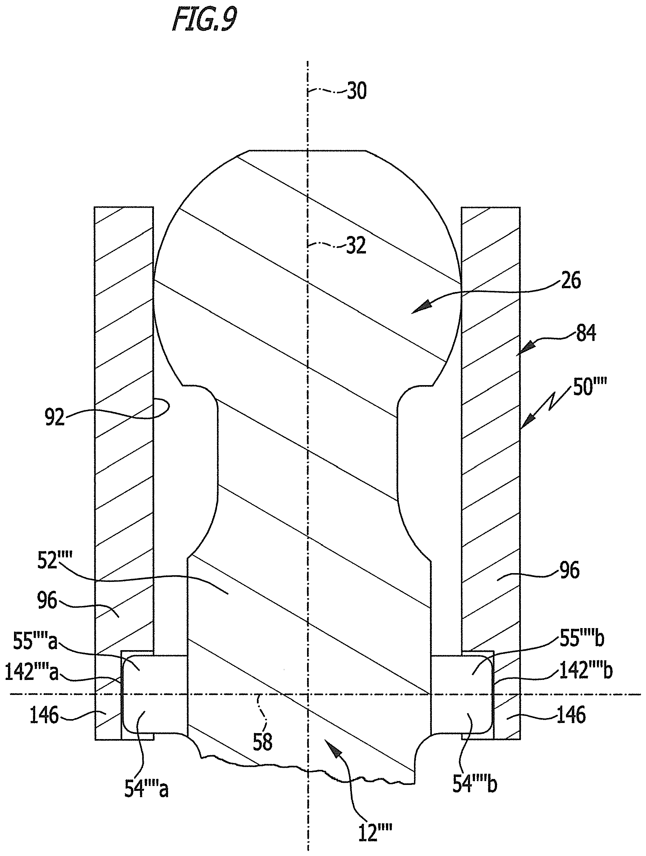

Bei einem fünften Ausführungsbeispiel eines erfindungsgemäßen Kugelhalses 12"", dargestellt in Fig. 9 sind die zweiten Stützflächen 142'a und 142'b nicht am Kugelhalsabschnitt 52"" oder an besonders vorgesehenen zweiten Positionierkörpern angeordnet, sondern liegen endseitig der ersten Positionierkörper 54""a und 54""b in einem definierten Abstand von der vertikalen Längsmittelebene 30 und erstrecken sich außerdem quer zu den Außenflächen 55""a und 55""b und insbesondere somit auch quer zu der Längsachse 58. Die Wechselwirkung dieser zweiten Positionierflächen 142""a und 142""b mit den Halteelementen 96 einer vierten Ausführungsform der Lastenträgerhalteeinrichtung erfolgt dadurch, dass die Halteelemente 96 Wandbereiche 146 aufweisen, die die zweiten Positionierflächen 142""a und 142""b übergreifen und sich an diesen im aufgesetzten Zustand der Lastenträgerhalteeinrichtung 50 abstützen.

Somit erfolgt auch hierdurch eine Fixierung der Halteelemente 96 gegen Bewegungen quer zur vertikalen Längsmittelebene 30 und somit eine stabile Aufnahme der Lastenträgerhalteeinrichtung 50"" an dem Kugelhals 12"".

Im Übrigen sind diejenigen Elemente, die mit denen der voranstehenden Ausführungsbeispiele des Kugelhalses und der voranstehenden Ausführungsformen der Lastenträgerhalteeinrichtung identisch sind, mit denselben Bezugszeichen versehen, so dass hinsichtlich der Beschreibung derselben vollinhaltlich auf die Ausführungen zum ersten Ausführungsbeispiel Bezug genommen werden kann.

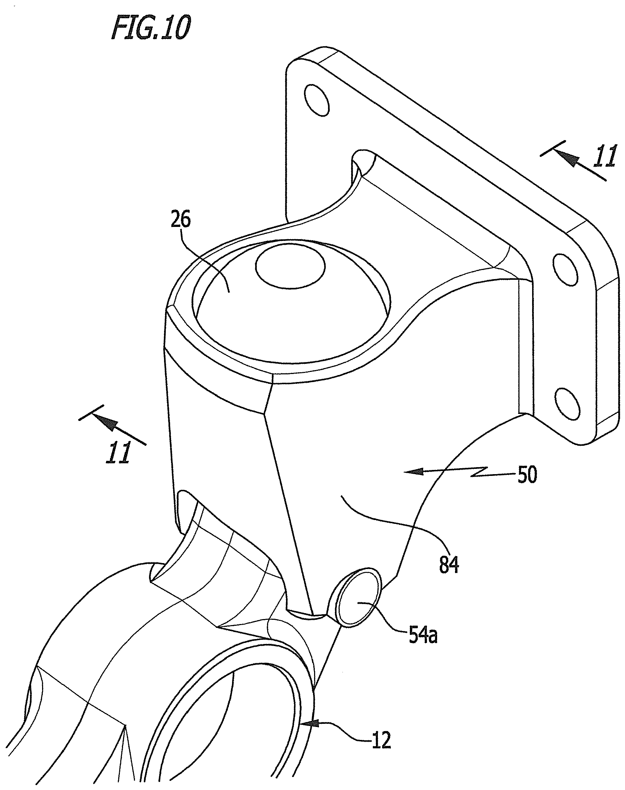

Zum Fixieren des Gehäusekörpers 84 in der Lastenträgerhaltestellung am Kugelhals 12 ist wie bei der in Fig. 10 dargestellten ersten Ausführungsform der Lastenträgerhalteeinrichtung 50 eine als Ganzes mit 160 bezeichnete erste Ausführung einer Fixiereinrichtung vorgesehen, welche eine in eine Gewindebohrung 162 eingeschraubte Fixierschraube 164 aufweist.

Die Gewindebohrung 162 bildet dabei einen Führungskanal in welchem die Fixierschraube 164 als Fixierelement in einer Führungsrichtung 165 zwischen einer Lösestellung und einer Fixierstellung bewegbar geführt ist.

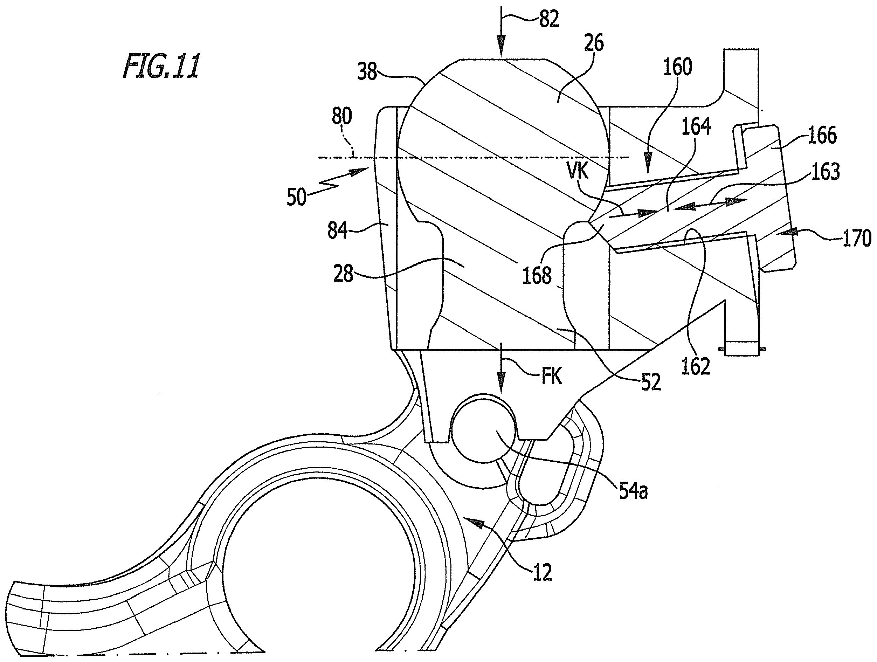

Die Fixierschraube 164 ist einerseits mit einem Betätigungselement 166 versehen, mit welchem die Fixierschraube 164 drehbar ist, und weist andererseits einen Schraubenkopf 168 auf, welcher in der in Fig. 11 dargestellten Fixierstellung an der Kugelfläche 38 der Kupplungskugel 26 drückend anliegt und zwar zwischen der Äquatorebene 80 und dem Kugelansatz 28, insbesondere nahe einem Übergang zum Kugelansatz 28.

Das Betätigungselement 166 und die Gewindebohrung 162 mit der eingeschraubten Fixierschraube 164 bilden eine Betätigungseinrichtung 170

Durch das drückende Anliegen des Schraubenkopfes 168 an der Kugelfläche 38 entsteht einerseits eine in der Aufsetzrichtung 82 als Fixierkraft FK wirkende Kraftkomponente auf die Lastenträgerhalteeinrichtung 50 und andererseits eine quer zur Aufsetzrichtung 82 gerichtete und als Verspannkraft VK wirkende Kraftkomponente, welche beispielsweise dazu führt, dass die Lastenträgerhalteeinrichtung 50 mit dem Gehäusekörper 84 an der Kupplungskugel 26 anliegt, und zwar auf einer der Fixierschraube 164 gegenüberliegenden Seite, so dass dadurch eine spielfreie Fixierung der Lastenträgerhalteeinrichtung 50 erfolgt, wobei die Fixierschraube 164 die Lastenträgerhalteeinrichtung 50 dadurch fest mit dem Kugelhals 12 und der Kupplungskugel 26 verbindet.

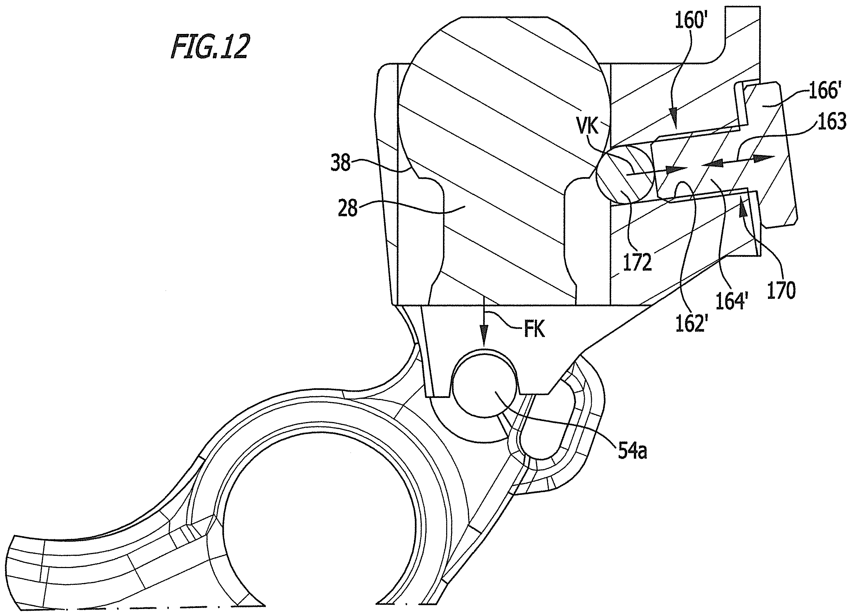

Bei einer zweiten Ausführung der erfindungsgemäßen Fixiereinrichtung 160', dargestellt in Fig. 12, ist ebenfalls eine Fixierschraube 164' vorgesehen, die in einer Gewindebohrung 162' eingeschraubt ist und jedoch nicht selbst unmittelbar auf die Kugelfläche 38 einwirkt, sondern über einen Fixierkörper 172, welcher beispielsweise als Kugel ausgebildet ist und ebenfalls die Kugelfläche 38 nahe des Übergangs derselben zum Kugelansatz 28 beaufschlagt.

Auch die Fixierschraube 164' ist mit dem Betätigungselement 166' versehen, durch welche diese in die Gewindebohrung 162' einschraubbar ist, so dass diese die Betätigungseinrichtung 170 bilden, um den Fixierkörper 172 zu beaufschlagen.

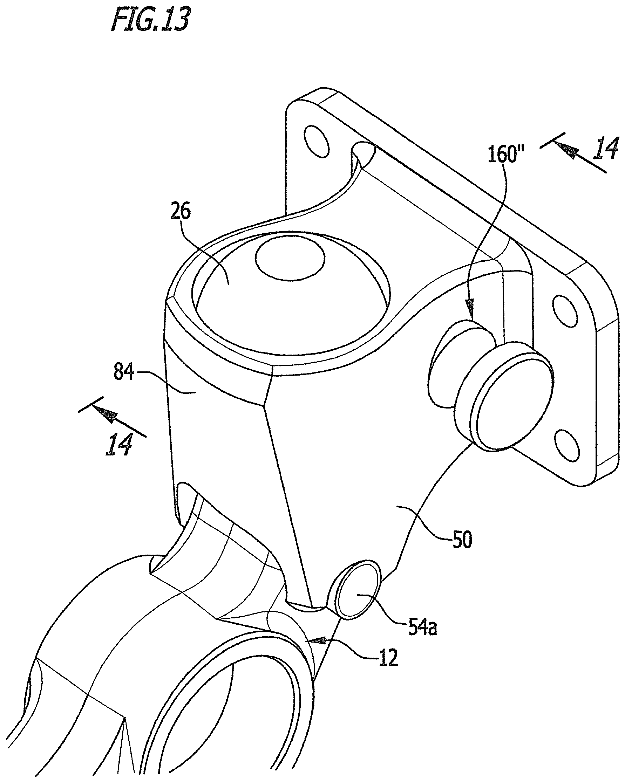

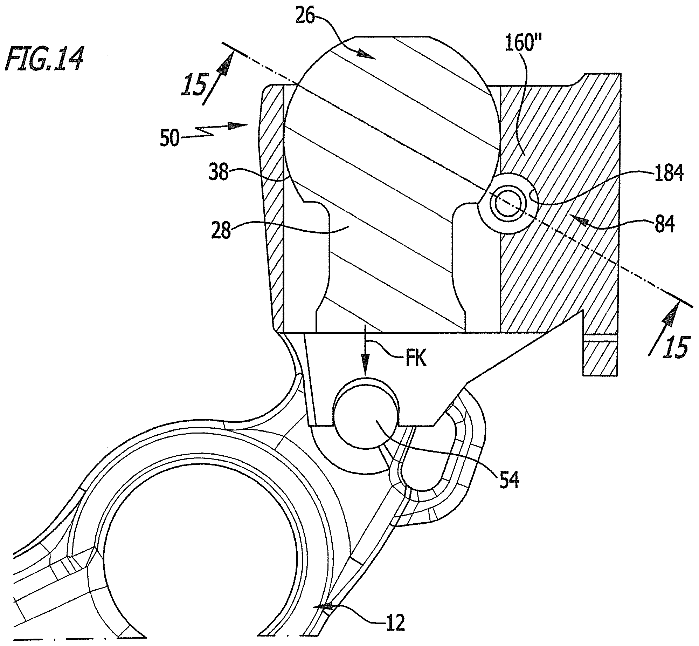

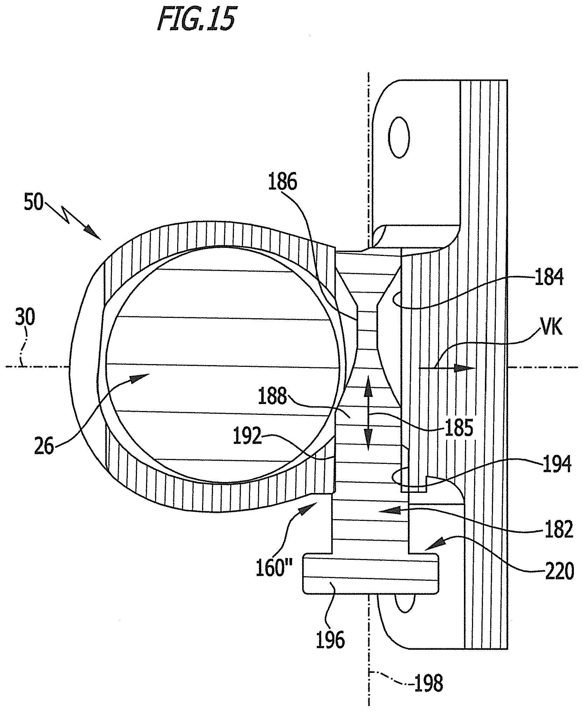

Bei einer fünften Ausführungsform der Lastenträgerhalteeinrichtung und einer dritten Ausführung einer erfindungsgemäßen Fixiereinrichtung 160", dargestellt in den Fig. 13 bis 15, ist ein als Ganzes mit 182 bezeichneter Fixierzapfen als Fixierelement vorgesehen, welcher in einen Führungskanal 184 eingreift, der quer durch den Gehäusekörper 84 und zwar derart verläuft, dass der Führungskanal 184 die Kugelfläche 38 zwischen der Äquatorebenen 80 und dem Kugelansatz 28, insbesondere nahe eines Übergangs zum Kugelansatz 28, tangiert, wenn in diesem der Fixierzapfen 182 in einer Führungsrichtung 185 quer zur vertikalen Längsmittelebene 30 verschoben wird.

Der Fixierzapfen 182 weist eine Einschnürung 186 auf, an welche sich eine Fixierfläche 188 anschließt, die an die Kugelfläche 38 im Bereich nahe deren Übergang zum Kugelansatz 28 anlegbar ist, um die Lastenträgerhalteeinrichtung 50 relativ zur Kupplungskugel 26 und somit auch zum Kugelhals 12 zu fixieren.

Hierzu ist der Fixierzapfen 182 quer zur vertikalen Längsmittelebene 30 bewegbar, und zwar so bewegbar, dass zum Aufsetzen der Lastenträgerhalteeinrichtung 50 auf die Kupplungskugel 26 und den Kugelhals 12 die Einschnürung 186 so positionierbar ist, dass die Kupplungskugel 26 durch Eingreifen in den Führungskanal 184 in der Aufsetzrichtung 82 passieren kann.

Ist die Lastenträgerhalteeinrichtung 50 derart aufgesetzt, dass die Positionsaufnahmeelemente 104 auf den Positionierkörpern 54a und 54b aufsitzen, so lässt sich der Fixierzapfen 182 quer zur Längsmittelebene 30 derart in der Führungsrichtung 185 verschieben, dass die Fixierfläche 188 an der Kugelfläche 38 nahe deren Übergang zum Kugelansatz 28 beaufschlagt und somit die Lastenträgerhalteeinrichtung 50 relativ zur Kupplungskugel 26 und dem Kugelhals 12 fixiert.

Die Verschiebung des Fixierzapfens 182 im Führungskanal erfolgt vorzugsweise dadurch, dass der Fixierzapfen 182 einen Gewindeabschnitt 192 aufweist, welcher in ein Gewindeabschnitt 194 des Führungskanals 184 eingreift, so dass durch die Gewindeabschnitte 192 und 194 und ein Betätigungselement 196 eine Betätigungseinrichtung 200 gebildet wird, welche durch ein Drehen eines Betätigungselements 196 zum Drehen des Fixierzapfens 182 um seine Längsachse 198 ein Verschieben des Fixierzapfens 182 im Führungskanal 184 ermöglicht, um entweder die Einschnürung 186 so zu positionieren, dass die Kupplungskugel 26 den Führungskanal 184 passieren kann oder die Fixierfläche 188 so zu positionieren, dass diese an der Kugelfläche 38 anliegt.

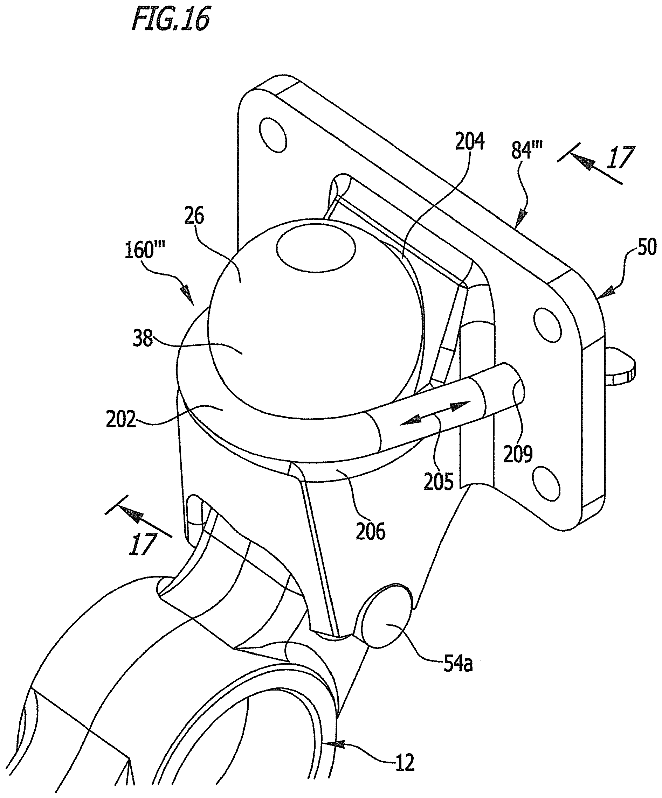

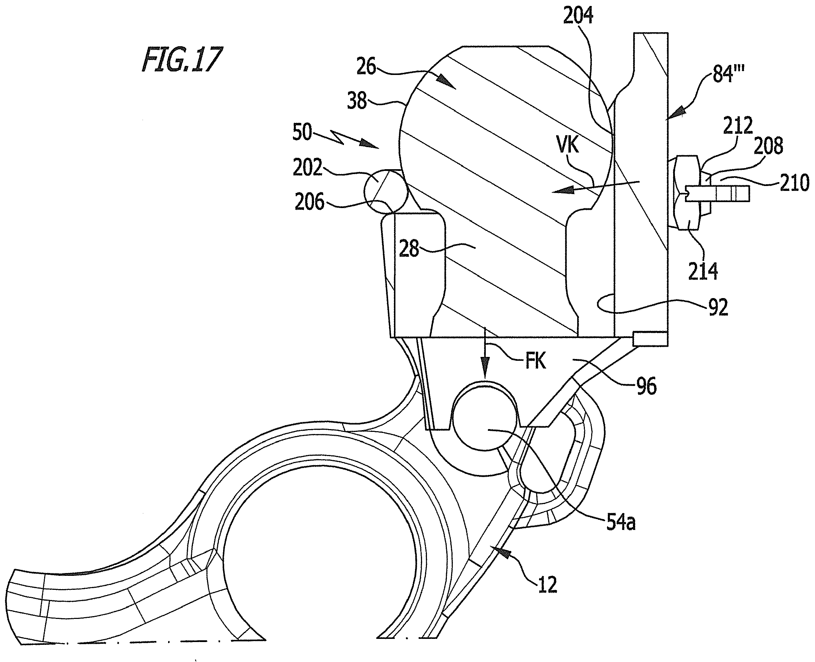

Bei einer vierten Ausführung einer erfindungsgemäßen Fixiereinrichtung, dargestellt in den Fig. 16 und 17 in Kombination mit einer sechsten Ausführungsform der Lastenträgerhalteeinrichtung ist ein U-förmig ausgebildeter Fixierbügel 202 als Fixierelement vorgesehen, welcher an der Kupplungskugel im Bereich der Kugelfläche 38 nahe des Übergangs zum Kugelansatz 28 anliegt und die Kupplungskugel 26 beispielsweise auf einer einem Kraftfahrzeug zugewandten Seite umfasst und in Richtung eines Kugelsitzes 204 beaufschlagt, in welchem die Kupplungskugel 26 mit einem Teilbereich der Kugelfläche 38 anliegt, wobei der Kugelsitz 204 vorzugsweise durch einen Teilbereich der Kugelführungsfläche 92 des Gehäusekörpers 84 gebildet ist.

Allerdings ist bei der sechsten Ausführungsform der Gehäusekörper 84 in dem Bereich, in dem der Fixierbügel 202 angreift, ausgeschnitten und bildet eine Auflagefläche 206 zur Fixierung des Fixierbügels 202 in einer Führungsrichtung 205, so dass der Fixierbügel sich einerseits an der Kugelfläche 38 nahe des Kugelansatzes 28 und andererseits an der Auflagefläche 206 abstützen kann und dadurch definiert relativ zur Kugelfläche 38 positioniert ist und andererseits dann die Kupplungskugel 26 in Richtung des Kugelsitzes 204 beaufschlagen kann.

Der Fixierbügel 202 ist im einfachsten Fall mit Bügelenden 208 versehen, die Führungsbohrungen 209 der Lastenträgerhalteeinrichtung 50 durchsetzen und die ein Gewinde 212 aufweisen, auf welches eine Flügelschraube 214 aufgeschraubt ist, so dass das Gewinde 212 und die Flügelschraube 214 eine Betätigungseinrichtung 220 bilden, wobei durch Festdrehen der Flügelschrauben der Fixierbügel 202 in Richtung des Kugelsitzes 204 bewegbar ist, um die Kupplungskugel 26 zwischen dem Kugelsitz 204 und dem Fixierbügel 202 einzuspannen und dadurch die Lastenträgerhalteeinrichtung 50 relativ zur Kupplungskugel und zum Kugelhals 12 festzulegen.

Im Übrigen wird hinsichtlich der weiteren Merkmale, die mit denen der voranstehenden Ausführungsbeispiele und Ausführungsformen identisch sind, auf die Ausführungen zu den voranstehenden Ausführungsbeispielen Bezug genommen.

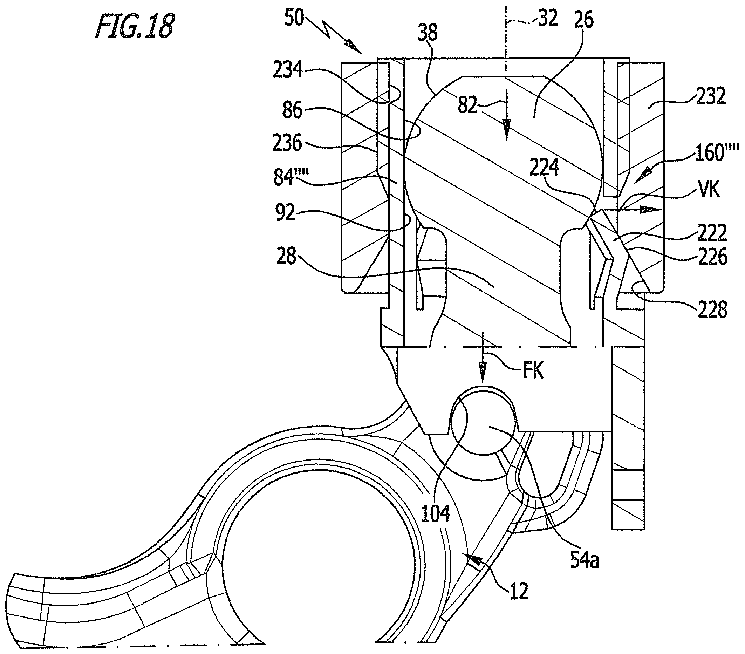

Bei einer fünften Ausführung einer Fixiereinrichtung 160"", integriert in eine siebte Ausführungsform einer Lastenträgerhalteeinrichtung und dargestellt in Fig. 18, sind diejenigen Elemente, die mit denen der voranstehenden Ausführungsbeispiele identisch sind, mit denselben Bezugszeichen versehen, so dass hinsichtlich der Beschreibung derselben vollinhaltlich auf die Ausführungen hierzu Bezug genommen werden kann.

Bei der fünften Ausführung der erfindungsgemäßen Fixiereinrichtung 160"" ist der Gehäusekörper 84"" als zylindrische Hülse ausgebildet, welche mit der Kugelaufnahme 86 und insbesondere einer Kugelführungsfläche 92 versehen ist.

Der Gehäusekörper 84"" ist dabei mit Fixierfingern 222 als Fixierelemente versehen, welche in Richtung der Kugelfläche 38 in die Kugelaufnahme 86 hinein bewegbar sind, um mit einer Stirnseite 224 an der Kugelfläche 38 zwischen der Äquatorebene 80 und dem Kugelansatz 28, insbesondere nahe ihres Übergangs zum Kugelansatz 28, angepresst zu werden.

Zum Anpressen der Fixierfinger 222 an der genannten Position der Kugelfläche 38 weisen die Fixierfinger 222 schräg verlaufende Außenseiten 226 auf, auf welche eine Keilringfläche 228 eines Betätigungskörpers 232 einwirkt.

Der Betätigungskörper 232 ist vorzugsweise als Ringkörper ausgebildet, welcher ein Innengewinde 234 aufweist, welches in ein Außengewinde 236 des Gehäusekörpers 84"" eingreift.

Die Außenseiten 226 der Fixierfinger 222, und der Betätigungskörper 232 mit der Keilringfläche 228 sowie das Innengewinde 234 und das Außengewinde 236 bilden eine Betätigungseinrichtung 240.

Durch Verdrehen des Betätigungskörpers 232 besteht nun die Möglichkeit, die Keilringfläche 228 relativ zu den schrägen Außenseiten 226 der Fixierfinger 222 so zu verschieben, dass diese eine Bewegung der Fixierfinger 222 radial zur Mittelachse der Kupplungskugel 26 und somit von der Kugelfläche 38 weg erlauben, um die Lastenträgerhalteeinrichtung 50 auf die Kupplungskugel 26 und den Kugelhals 12 aufsetzen zu können, wobei die Positionsaufnahmeelemente 104 auf den Positionierkörpern 54 aufsitzen.

Ein Verdrehen des Betätigungskörpers 232 erlaubt aber auch, mit der Keilringfläche 228 die schrägen Außenseiten 224 der Fixierfinger 222 derart zu beaufschlagen, dass diese sich radial nach innen bewegen, und sich insbesondere mit ihren Stirnseiten 224 an der Kugelfläche 38 nahe des Übergangs zum Kugelansatz 28 anlegen.

Dadurch erfolgt eine Beaufschlagung der Lastenträgerhalteeinrichtung 50 mit einer Kraft parallel zur Aufsetzrichtung und somit ein Fixieren der Lastenträgerhalteeinrichtung 50 an der Kupplungskugel 26 und dem Kugelhals 12.

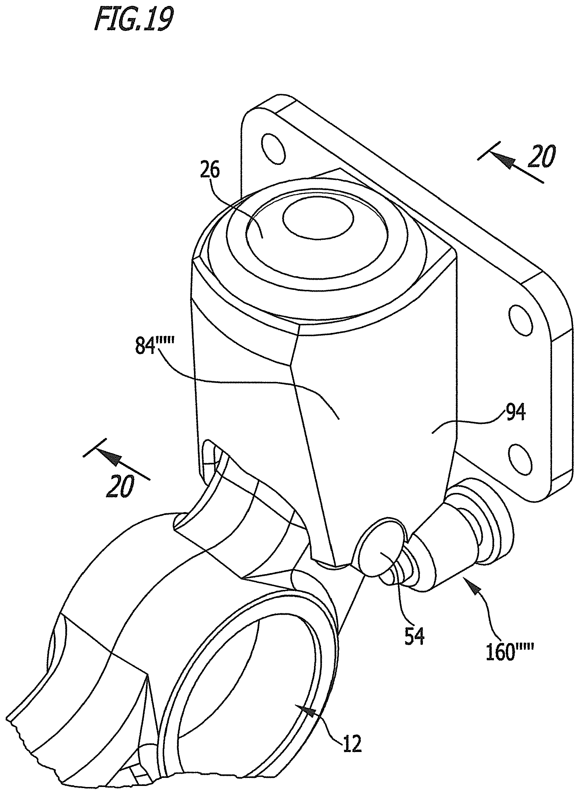

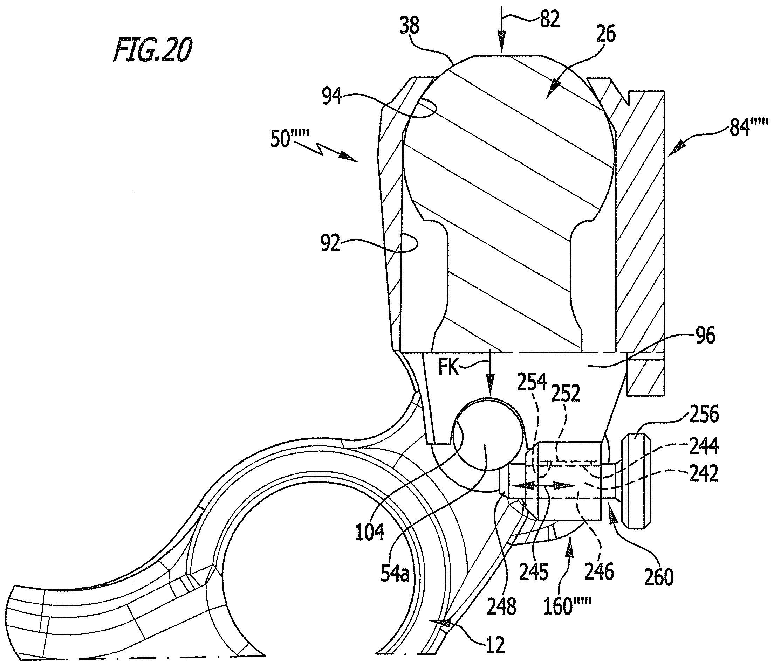

Bei einer sechsten Ausführung einer erfindungsgemäßen Fixiereinrichtung 160""' integriert in eine achte Ausführungsform der Lastenträgerhalteeinrichtung und dargestellt in den Fig. 19 und 20, ist jeweils an den Halteelementen 96 ein Fixierzapfen 242 als Fixierelement vorgesehen, welcher in einem Führungskanal 244 angeordnet und in einer Führungsrichtung 245 geführt ist, der in einem an dem jeweiligen Halteelement 96 gehaltenen Lagerkörper 246 ausgebildet ist.

Der Lagerkörper 246 und der Fixierzapfen 242 sind dabei so dimensioniert und an den Halteelementen 96 angeordnet, dass der Fixierzapfen 242 mit einem über den Lagerkörper 246 überstehenden Zapfenende 248 in der Lage ist, den jeweiligen Positionierkörper 54 auf einer der Kupplungskugel 26 abgewandten Seite zu hintergreifen und zu beaufschlagen und dadurch eine Kraft auf den Gehäusekörper 84""' auszuüben, welche diesen in der Aufsetzrichtung 82 beaufschlagt.

Bei diesem Ausführungsbeispiel ist allerdings der Gehäusekörper 84"" so ausgebildet, dass dieser mit einer sich an die Kugelführungsfläche 92 anschließenden Endfläche 94 auf der Kugelfläche 38 der Kupplungskugel 26 aufliegt und somit von der Kupplungskugel 26 getragen wird.

Somit dienen die Positionsaufnahmeelemente 104, die an den Positionierkörpern 54 angreifen, lediglich dazu, die Lastenträgerhalteeinrichtung 50""' relativ zum Kugelhals 12 exakt ausgerichtet zu halten.

Zum Bewegen der Fixierzapfens 242 relativ zum Lagerkörper 246 sind die Fixierzapfen 242 mit einem Außengewinde 252 versehen, welches in ein Innengewinde 254 des Führungskanals eingreift, so dass die beiden Gewinde 252 und 254 eine Gewindeführung darstellen, die ein Verschieben des Zapfens zulässt, wenn dieser mittels eines Betätigungselements 256 gedreht wird.

Damit bilden die Gewinde 252 und 254 mit dem Betätigungselement 256 eine Betätigungseinrichtung 260 zum Bewegen des Fixierelements 242.

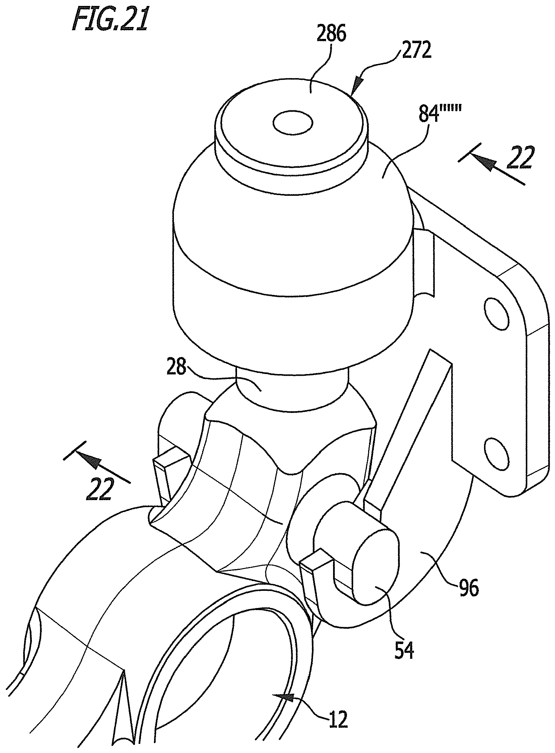

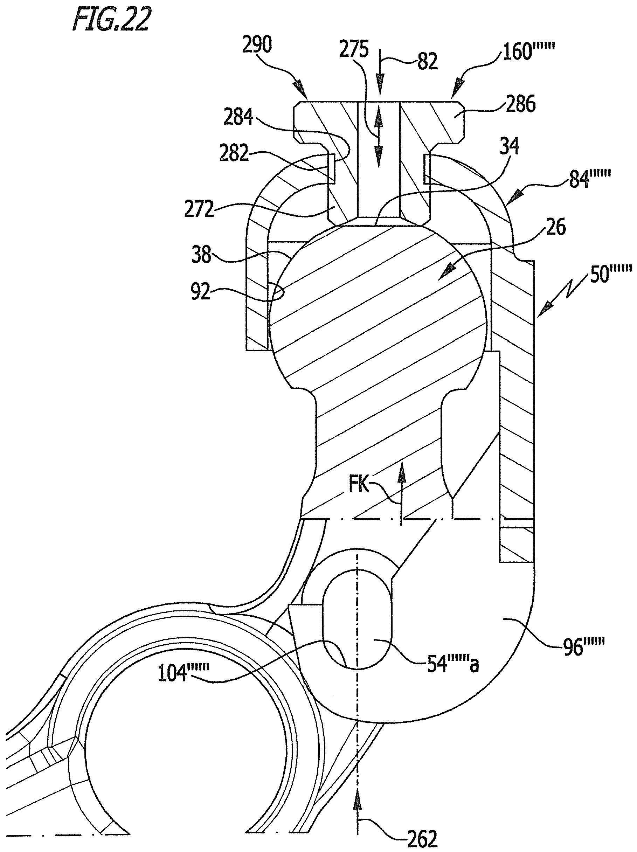

Bei einer siebten Ausführung der Fixiereinrichtung 160'''''' und einer neunten Ausführungsform der Lastenträgerhalteeinrichtung, dargestellt in Fig. 21 und 22 ist der Gehäusekörper 84""" so ausgebildet, dass dieser die Kupplungskugel 26 übergreift und mit der Kugelführungsfläche 92 an der Kugelfläche 38 der Kupplungskugel 26 anliegt.

Ferner sind die Halteelemente 96""" so ausgebildet, dass diese an den Fixierkörpern 54""" so anliegen, dass die Positionsaufnahmeelemente 104 in Richtung in einer Aufsetzrichtung 82""" zu bewegen sind, die auf die Kupplungskugel 26 zu gerichtet ist, wobei die Positionsaufnahmeelement 104'''''' die Positionierkörper 54"""a auf einer der Kupplungskugel abgewandten Seite übergreifen und an dieser angreifen.

Dabei ist der Gehäusekörper 84""" so ausgebildet, dass dieser so weit auf die Kupplungskugel 26 aufgesetzt werden kann, dass die Positionsaufnahmeelemente 104 der Halteelemente 96 auf einer der Kupplungskugel 26 abgewandten Seite die Positionierkörper 54 hintergreifend an diesen eingehängt werden können, um an diesen formschlüssig festgelegt zu werden.

Zum Fixieren der Lastenträgerhalteeinrichtung 50 ist es ausgehend von einem Hintergreifen der Positionierkörper 54 durch die Positionsaufnahmeelemente 104 erforderlich, die Positionsaufnahmeelemente 104'''''' mit den Halteelementen 96""" und dem Gehäusekörper 84""" entgegengesetzt zur Aufsetzrichtung 82 in der Fixierrichtung 262 zu bewegen, so dass die Positionierelemente 54""" in die Positionsaufnahmeelemente 104'''''' eintauchen können.

Hierzu ist zur Bildung der Fixiereinrichtung 160'''' in dem Gehäusekörper 84""" ein Druckelement 272 als Fixierelement vorgesehen, welches in einer Führungsrichtung 175 geführt bewegbar ist und auf die Kupplungskugel 26 im Bereich ihrer Abflachung 34 wirkt, um den Gehäusekörper 84 in der Fixierrichtung 262 entgegengesetzt zur Aufsetzrichtung 82 bewegen zu können.

Das Druckelement 272 umfasst beispielsweise ein Außengewinde 282, welches in ein Innengewinde 284 eines den Gehäusekörper 84 durchsetzenden Durchbruchs eingreift, und ist mit einem Betätigungselement 286 gekoppelt, wobei das Betätigungselement 286 mit dem Außengewinde 282 und dem Innengewinde 284 eine Betätigungseinrichtung 290 bilden.

Durch Drehen des Druckelements 272, beispielsweise mittels eines Betätigungselements 286, besteht die Möglichkeit, die Lastenträgerhalteeinrichtung 50""" in der Fixierrichtung 262 zu bewegen und dadurch zu halten, dass sich das Druckelement 272 an der Kupplungskugel 26 abstützt und die gesamte Einheit aus dem Gehäusekörper 84""", den Halteelementen 96""" und den Positionsaufnahmeelementen 104'''''' in der Fixierrichtung 262 soweit bewegt, dass die Positionsaufnahmeelemente 104 kraftbeaufschlagt an den Fixierkörpern 54 anliegen.

Darüber hinaus erfolgt in bekannter Weise eine Fixierung des Gehäusekörpers 84""" durch die zylindrische Kugelführungsfläche 92, die an der Kugelfläche 38 der Kupplungskugel 26 anliegt.

Bei einer achten Ausführung, einer erfindungsgemäßen Fixiereinrichtung 160"""' integriert in eine zehnte Ausführungsform einer Lastenträgerhalteeinrichtung 50"""' ist diese derart modifiziert, dass der Gehäusekörper 84''''''' auf der Kugelfläche 38 der Kupplungskugel 26 aufsitzt.

Die Fixiereinrichtung 160''''''' umfasst ein Fixierkörper 292 als Fixierelement, welcher mittels einer Kniehebelvorrichtung 294 als Betätigungseinrichtung in Richtung der Kugelfläche 38 der Kupplungskugel 26 bewegbar oder von dieser wegbewegbar ist.

Der Fixierkörper 292 liegt dabei vorzugsweise an der Kugelfläche 38 im Bereich eines Übergangs derselben zum Kugelansatz 28 an, um die Lastenträgerhalteeinrichtung 50''''''' an der Kupplungskugel 26 festzulegen.

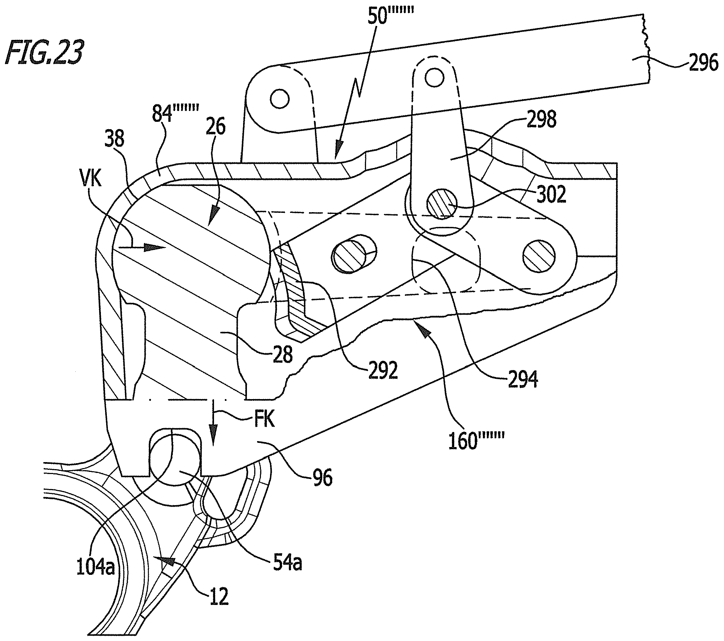

Um zum Festlegen des Fixierkörpers 292 ist die Kniehebelvorrichtung 294 in eine in Fig. 23 gestrichelt dargestellte Übertotpunktstellung bewegbar, in welcher diese das Fixierelement 292 gegen die Kugelfläche 38 der Kupplungskugel 26 drückt.

Wird die Kniehebelvorrichtung 294 in eine geknickte Stellung bewegt, wie in Fig. 23 dargestellt, so steht der Fixierkörper 292 im Abstand von der Kugelfläche 38 der Kupplungskugel 26 und ermöglicht ein Abnehmen der Lastenträgerhalteeinrichtung 50"""' von der Kupplungskugel 26 und dem Kugelhals 12.

Ein Betätigen der Kniehebelvorrichtung 294 erfolgt durch einen Betätigungshebel 296, welcher über einen Zwischenhebel 298 auf ein Kniegelenk 302 der Kniehebelvorrichtung wirkt, um dieses entweder in die durchgeknickte Stellung zu bewegen oder in die in Fig. 23 gestrichelt dargestellte Übertotpunktstellung.

## Patentansprüche

1. Anhängekupplung (10) für Kraftfahrzeuge, umfassend einen mit einem ersten Ende (14) mittels eines Kugelhalsträgers (16) fahrzeugfest an einer Heckpartie (18) eines Kraftfahrzeugs montierbaren Kugelhals (12) der an einem zweiten Ende (24) eine Kupplungskugel (26) trägt, wobei an dem Kugelhals (12) in einem definierten Abstand von der Kupplungskugel (26) mindestens ein erster Positionierkörper (54) zur Positionierung einer auf die Kupplungskugel (26) und den Kugelhals (12) aufsetzbaren Lastenträgerhalteeinrichtung (50) angeordnet ist, wobei der mindestens eine erste Positionierkörper (54) an einem Kugelhalsabschnitt (52) des Kugelhalses (12) angeordnet ist, welcher an einen die Kupplungskugel (26) tragenden, Kugelansatz (28) des Kugelhalses (12) angrenzt und insbesondere sich ausgehend von dem Kugelansatz (28) entlang des Kugelhalses (12) über eine Distanz erstreckt, die maximal einem eineinhalbfachen des Durchmessers der Kupplungskugel (26) entspricht, wobei der mindestens eine erste Positionierkörper (54) sich quer zu einem Verlauf des diesen Positionierkörper (54) tragenden Kugelhalsabschnitts (52) und von diesem weg erstreckt, **dadurch gekennzeichnet, dass** der mindestens eine erste Positionierkörper (54) auf einander gegenüberliegenden Seiten angeordnete erste Positionierflächen (64, 66) aufweist, die an einer Außenseite (55, 255) des Positionierkörpers (54) angeordnet sind, und Flächenbereiche einer geometrischen Fläche sind, welche den den mindestens einen Positionierkörper (54) tragenden Kugelhalsabschnitt (52) schneidet, dass an dem Kugelhals (12) mindestens eine zweite Positionierfläche (142) angeordnet ist, welche quer zu den ersten Positionierflächen (64, 66) verläuft, und dass die mindestens eine zweite Positionierfläche (142) an dem Kugelhalsabschnitt (52) des Kugelhalses (12) angeordnet ist, welcher an den die Kupplungskugel (26) tragenden Kugelansatz (28) des Kugelhalses (12) angrenzt und den ersten Positionierkörper (54) trägt.

2. Anhängekupplung nach Anspruch 1, **dadurch gekennzeichnet, dass** die mindestens eine erste Positionierfläche (64, 66) außerhalb einer Projektionskontur (PK) der Kupplungskugel (26) liegt, welche durch Projektion der Kupplungskugel (26) auf den mindestens ersten Positionierkörper (54) entsteht, wobei insbesondere die Projektionskontur (PK) den mindestens einen ersten Positionierkörper (54) schneidet.

3. Anhängekupplung nach Anspruch 1 oder 2, **dadurch gekennzeichnet, dass** die mindestens eine erste Positionierfläche (64, 66) mindestens einen Führungsflächenbereich (76, 78) aufweist, welcher parallel zu einer Aufsetzrichtung (82) der Lastenträgerhalteeinrichtung (50) verläuft.

4. Anhängekupplung nach einem der voranstehenden Ansprüche, **dadurch gekennzeichnet, dass** an dem Kugelhalsabschnitt (52) auf einander gegenüberliegenden Seiten einer Längsmittelebene (30) des Kugelhalses (12) jeweils ein erster Positionierkörper (54) angeordnet ist und dass insbesondere die ersten Positionierkörper (54, 254) spiegelsymmetrisch zur Längsmittelebene (30) des Kugelhalses (12) angeordnet sind.

5. Anhängekupplung nach einem der voranstehenden Ansprüche, **dadurch gekennzeichnet, dass** die mindestens eine erste Positionierfläche (64, 66) mindestens einen Positionierflächenbereich (72, 74) aufweist, der quer zu einer Aufsetzrichtung (82) verläuft.

6. Anhängekupplung nach einem der voranstehenden Ansprüche, **dadurch gekennzeichnet, dass** die mindestens eine zweite Positionierfläche (142) an dem ersten Positionierkörper (54) angeordnet ist.

7. Anhängekupplung nach einem der voranstehenden Ansprüche, **dadurch gekennzeichnet, dass** die zweite Positionierfläche (142) an einem zweiten Positionierkörper (144) angeordnet ist.

8. Anhängekupplung nach einem der voranstehenden Ansprüche, **dadurch gekennzeichnet, dass** die zweite Positionierfläche (142) außerhalb einer Projektionskontur (PK) der Kupplungskugel (26) liegt, welche durch Projektion der Kupplungskugel (26) auf den diese tragenden Positionierkörper (54, 142) entsteht.

9. Anhängekupplung nach einem der voranstehenden Ansprüche, **dadurch gekennzeichnet, dass** die zweite Positionierfläche (142) innerhalb einer Projektionskontur der Kupplungskugel (26) liegt, welche durch Projektion der Kupplungskugel (26) auf den die zweite Positionierfläche tragenden Positionierkörper (144) entsteht.

10. Lastenträgerhalteeinrichtung für eine einen Kugelhals (12) und eine Kupplungskugel (26) aufweisende Anhängekupplung (10), für eine Anhängekupplung (18) nach einem der voranstehenden Ansprüche, umfassend einen mit Halteelementen (96) versehenen Gehäusekörper (84) mit einer Kugelaufnahme (86) für die Kupplungskugel (26) des Kugelhalses (12) der Anhängekupplung (10), wobei die Halteelemente (96) jeweils mindestens ein Positionsaufnahmeelement (104) aufweisen, welches fest mit dem Gehäusekörper (84) verbunden ist und welches mit dem an dem Kugelhals (12) angeordneten Positionierkörper (54) zusammenwirkt, wobei das Positionsaufnahmeelement (104) Aufnahmeflächen (114, 116) aufweist, die mit den ersten Positionierflächen (64, 66) des mindestens einen Positionierkörpers (54, 144) in einer Lastenträgerhaltestellung zusammenwirken und **dadurch gekennzeichnet, dass** das Halteelement (96) eine Innenseite (98) oder einen Wandbereich (146) aufweist, an denen sich die mindestens eine an dem Kugelhalsabschnitt (52) des Kugelhalses (12) angeordnete zweite Positionierfläche (142) abstützt.

11. Lastenträgerhalteeinrichtung nach Anspruch 10, **dadurch gekennzeichnet, dass** das Positionsaufnahmeelement (104) mit dem Positionierkörper (54), insbesondere unter Bildung eines Formschlusses, derart zusammenwirkt, dass der Gehäusekörper (84) gegen Kippbewegungen um quer, insbesondere senkrecht, zur Mittelachse (32) der Kupplungskugel (26) verlaufende Kippachsen KAK relativ zum Kugelhals (12) festgelegt ist.

12. Lastenträgerhalteeinrichtung nach Anspruch 10 oder 11, **dadurch gekennzeichnet, dass** der Positionierkörper (54) und das Positionsaufnahmeelement (104), insbesondere unter Bildung eines Formschlusses, derart zusammenwirken, dass der Gehäusekörper (84) gegen eine Drehbewegung um eine parallel zur Mittelachse (32) der Kupplungskugel (26) oder mit der Mittelachse (32) der Kupplungskugel (26) einen Winkel von maximal 20° einschließende Drehachse (D) drehfest festgelegt ist.

13. Lastenträgerhalteeinrichtung nach einem der Ansprüche 10 bis 12, **dadurch gekennzeichnet, dass** mit dem Gehäusekörper (84) zwei Positionsaufnahmeelemente (104) fest verbunden sind, dass die beiden Positionsaufnahmeelemente (104) relativ zueinander starr angeordnet sind und dass insbesondere die beiden Positionsaufnahmeelemente (104) relativ zum Gehäusekörper (84) starr angeordnet sind.

14. Lastenträgerhalteeinrichtung nach einem der Ansprüche 10 bis 13, **dadurch gekennzeichnet, dass** das Positionsaufnahmeelement (104) zwei einander zugewandte Aufnahmeflächen (114, 116) aufweist und dass insbesondere der jeweilige Positionierkörper (54) mit seinem die Positionierfläche (64, 66) tragenden Bereich in einer Lastenträgerhaltestellung zwischen den Aufnahmeflächen (114, 116) der mindestens einen Positionsaufnahmeelemente (104) angeordnet ist.

15. Lastenträgerhalteeinrichtung nach einem der Ansprüche 10 bis 14, **dadurch gekennzeichnet, dass** die Lastenträgerhalteeinrichtung (50) eine den Gehäusekörper (84) am Kugelhals (12) festlegende Fixiereinrichtung (140, 170) aufweist, dass die Fixiereinrichtung (140, 170) ein Fixierelement (142, 172) aufweist, welches den Gehäusekörper (84) relativ zum Kugelhals in der Lastenträgerhaltestellung fixiert, dass das Fixierelement (164, 172, 182, 202, 222, 246, 272, 292) in einer Fixierstellung am Kugelhals (12"') oder an dem Positionierkörper (54) oder an der Kupplungskugel (26) angreift, und dass insbesondere das Fixierelement (164, 172, 182, 202, 222, 242, 272) in einer Führungsrichtung (165, 185, 205, 245) zwischen einer Lösestellung und einer Fixierstellung bewegbar ist und dass insbesondere das Fixierelement (164, 172, 182, 202, 222, 242, 272, 292) durch eine Betätigungseinrichtung (170, 200, 220, 240, 260, 290) in der Führungsrichtung (165, 185, 205, 245) bewegbar ist.

16. Lastenträgerhalteeinrichtung nach Anspruch 15, **dadurch gekennzeichnet, dass** die Betätigungseinrichtung einen Gewindeantrieb (162, 164, 192, 194, 212, 214, 234, 236, 282, 284) zum Bewegen des Fixierelements (164, 172, 182, 202, 222, 242, 272) zwischen der Lösestellung und der Fixierstellung aufweist oder dass die Betätigungseinrichtung einen Kniehebelantrieb zum Bewegen des Fixierelements (292) zwischen der Lösestellung und der Fixierstellung aufweist.

## Claims

1. Trailer coupling (10) for motor vehicles, including a ball neck (12) which is mountable on a rear part (18) of a motor vehicle so as to be fixed to the vehicle by means of a ball neck carrier (16) by way of a first end (14) and on a second end (24) carries a coupling ball (26), wherein for positioning a load carrier holding device (50), which is loadable onto the coupling ball (26) and the ball neck (12), at least one first positioning body (54) is arranged on the ball neck (12) at a defined spacing from the coupling ball (26), wherein the at least one first positioning body (54) is arranged on a ball neck portion (52) of the ball neck (12) which adjoins a ball attachment (28) of the ball neck (12) which carries the coupling ball (26) and in particular, proceeding from the ball attachment (28), extends along the ball neck (12) over a distance which corresponds to a maximum of one and a half times the diameter of the coupling ball (26), wherein the at least one first positioning body (54) extends transversely with respect to a development of the ball neck portion (52) which carries said positioning body (54) and away from said ball neck portion, **characterized in that** the at least one first positioning body (54) comprises first positioning surfaces (64, 66) which are arranged on oppositely situated sides, and which are arranged on an outside surface (55, 255) of the positioning body (54), and which are surface regions of a geometrical surface which intersects the ball neck portion (52) carrying the at least one positioning body (54), and **in that** at least one second positioning surface (142), which runs transversely with respect to the first positioning surfaces (64, 66), is arranged on the ball neck (12), and **in that** the at least one second positioning surface (142) is arranged on the ball neck portion (52) of the ball neck (12) which adjoins the ball attachment (28) of the ball neck (12) carrying the coupling ball (26) and carries the first positioning body (54).

2. Trailer coupling according to Claim 1, **characterized in that** the at least one first positioning surface (64, 66) lies outside a projection contour (PK) of the coupling ball (26) which is generated as a result of the projection of the coupling ball (26) onto the at least first positioning body (54), wherein in particular the projection contour (PK) intersects the at least one first positioning body (54).

3. Trailer coupling according to Claim 1 or 2, **characterized in that** the at least one first positioning surface (64, 66) comprises at least one guide surface region (76, 78) which runs parallel to an attachment direction (82) of the load carrier holding device (50).

4. Trailer coupling according to one of the preceding claims, **characterized in that** a respective first positioning body (54) is arranged on the ball neck portion (52) on oppositely located sides of a longitudinal centre plane (30) of the ball neck (12), and **in that** in particular the first positioning bodies (54, 254) are arranged in a mirror-symmetrical manner to the longitudinal centre plane (30) of the ball neck (12).

5. Trailer coupling according to one of the preceding claims, **characterized in** the at least one first positioning surface (64, 66) comprises at least one positioning surface region (72, 74) which runs transversely with respect to an attachment direction (82).

6. Trailer coupling according to one of the preceding claims, **characterized in that** the at least one second positioning surface (142) is arranged on the first positioning body (54).

7. Trailer coupling according to any one of the preceding claims, **characterized in that** the second positioning surface (142) is arranged on a second positioning body (144).

8. Trailer coupling according to one of the preceding claims, **characterized in that** the second positioning surface (142) lies outside of a projection contour (PK) of the coupling ball (26) which is generated as a result of the projection of the coupling ball (26) onto the positioning body (54, 142) carrying said positioning surface.

9. Trailer coupling according to one of the preceding claims, **characterized in that** the second positioning surface (142) lies inside of a projection contour of the coupling ball (26) which is generated as a result of the projection of the coupling ball (26) onto the positioning body (144) carrying the second positioning surface.

10. Load carrier holding device for a trailer coupling (10) which comprises a ball neck (12) and a coupling ball (26), for a trailer coupling (18) according to one of the preceding claims, said load carrier holding device including a housing body (84) provided with holding elements (96) and with a ball receiving means (86) for the coupling ball (26) of the ball neck (12) of the trailer coupling (10), wherein the holding elements (96) each comprise at least one position receiving element (104) which is fixedly connected to the housing body (84) and interacts with the positioning body (54) which is arranged on the ball neck (12), wherein the position receiving element (104) comprises receiving surfaces (114, 116) which interact with the first positioning surfaces (64, 66) of the at least one positioning body (54, 144) in a load carrier holding position, and **characterised in that** the holding element (96) comprises an inner side (98) or a wall region (146) on which is supported the at least one second positioning surface (142) arranged on the ball neck portion (52) of the ball neck (12).

11. Load carrier holding device according to Claim 10, **characterized in that** the position receiving element (104) interacts with the positioning body (54) in such a manner, in particular so as to form a positive-locking fit, that the housing body (84) is secured relative to the ball neck (12) against tilting movements about tilt axes KAK which extend transversely, in particular perpendicularly, with respect to the centre axis (32) of the coupling ball (26).

12. Load carrier holding device according to Claim 10 or 11, **characterized in that** the positioning body (54) and the position receiving element (104) interact in such a manner, in particular so as to form a positive-locking fit, that the housing body (84) is secured in a non-rotatable manner against a rotational movement about a rotational axis (D) which is parallel to the centre axis (32) of the coupling ball (26) or encloses a maximum angle of 20° with the centre axis (32) of the coupling ball (26).

13. Load carrier holding device according to one of Claims 10 to 12, **characterized in that** two position receiving elements (104) are fixedly connected to the housing body (84), **in that** the two position receiving elements (104) are arranged in a rigid manner relative to one another, and **in that** in particular the two position receiving elements (104) are arranged rigidly relative to the housing body (84).

14. Load carrier holding device according to one of Claims 10 to 13, **characterized in that** the position receiving element (104) comprises two receiving surfaces (114, 116) which face one another, and **in that** in particular the respective positioning body (54) is arranged in a load carrier holding position with its region carrying the positioning surface (64, 66) between the receiving surfaces (114, 116) of the at least one position receiving element (104).

15. Load carrier holding device according to one of Claims 10 to 14, **characterized in that** the load carrier holding device (50) comprises a fixing device (140, 170) which secures the housing body (84) on the ball neck (12), **in that** the fixing device (140, 170) comprises a fixing element (142, 172) which fixes the housing body (84) relative to the ball neck in the load carrier holding position, **in that** the fixing element (164, 172, 182, 202, 222, 246, 272, 292) engages with the ball neck (12"') or with the positioning body (54) or with the coupling ball (26) in a fixing position, and **in that** in particular the fixing element (164, 172, 182, 202, 222, 242, 272) is movable in a guide direction (165, 185, 205, 245) between a release position and a fixing position and **in that** in particular the fixing element (164, 172, 182, 202, 222, 242, 272, 292) is movable in the guide direction (165, 185, 205, 245) as a result of an actuating device (170, 200, 220, 240, 260, 290).

16. Load carrier holding device according to Claim 15, **characterized in that** the actuating device comprises a threaded drive (162, 164, 192, 194, 212, 214, 234, 236, 282, 284) for moving the fixing element (164, 172, 182, 202, 222, 242, 272) between the release position and the fixing position or **in that** the actuating device comprises a toggle lever drive for moving the fixing element (292) between the release position and the fixing position.

## Revendications

1. Attelage (10) pour des véhicules automobiles, comprenant une boule d'attelage (12) pouvant être montée avec une première extrémité (14) au moyen d'un support de boule d'attelage (16) de manière fixée au véhicule au niveau d'une partie arrière (18) d'un véhicule automobile qui porte à une seconde extrémité (24) une boule d'attelage (26), dans lequel au moins un premier corps de positionnement (54) est agencé pour le positionnement d'un dispositif de retenue de support de charge (50) pouvant être placé sur la boule d'attelage (26) et le col de boule d'attelage (12) au niveau du col de boule d'attelage (12) à une distance définie de la boule d'attelage (26), dans lequel l'au moins un premier corps de positionnement (54) est agencé au niveau d'une section de col de boule d'attelage (52) du col de boule d'attelage (12) qui jouxte une saillie de boule (28) portant la boule d'attelage (26) du col de boule d'attelage (12) et s'étend en particulier à partir de la saillie de boule (28) le long du col de boule d'attelage (12) sur une distance qui correspond au maximum à une fois et demie le diamètre de la boule d'attelage (26), dans lequel l'au moins un premier corps de positionnement (54) s'étend transversalement à une étendue de la section de col de boule d'attelage (52) portant ce corps de positionnement (54) et loin de celle-ci, **caractérisé en ce que** l'au moins un corps de positionnement (54) présente des premières surfaces de positionnement (64, 66) agencées sur des côtés opposés qui sont disposées au niveau d'un côté extérieur (55, 255) du corps de positionnement (54), et sont des zones de surface d'une surface géométrique qui coupe la section de col de boule d'attelage (52) portant l'au moins un corps de positionnement (54), qu'au moins une seconde surface de positionnement (142) est agencée au niveau du col de boule d'attelage (12) qui s'étend transversalement aux premières surfaces de positionnement (64, 66), et que l'au moins une seconde surface de positionnement (142) est agencée au niveau de la section de col de boule d'attelage (52) du col de boule d'attelage (12) qui jouxte la saillie de boule (28) portant la boule d'attelage (26) du col de boule d'attelage (12) et porte le premier corps de positionnement (54).

2. Attelage selon la revendication 1, **caractérisé en ce que** l'au moins une première surface de positionnement (64, 66) se trouve en dehors d'un contour de projection (PK) de la boule d'attelage (26) qui apparaît par projection de la boule d'attelage (26) sur l'au moins un premier corps de positionnement (54), dans lequel en particulier le contour de projection (PK) coupe l'au moins un premier corps de positionnement (54).

3. Attelage selon la revendication 1 ou 2, **caractérisé en ce que** l'au moins une première surface de positionnement (64, 66) présente au moins une zone de surface de guidage (76, 78) qui s'étend parallèlement à un sens de placement (82) du dispositif de retenue de support de charge (50).

4. Attelage selon l'une des revendications précédentes, **caractérisé en ce que** respectivement un premier corps de positionnement (54) est agencé au niveau de la section de col de boule d'attelage (52) sur des côtés opposés d'un plan médian longitudinal (30) du col de boule d'attelage (12) et qu'en particulier les premiers corps de positionnement (54, 254) sont agencés de manière symétrique par rapport au plan médian longitudinal (30) du col de boule d'attelage (12).

5. Attelage selon l'une des revendications précédentes, **caractérisé en ce que** l'au moins une première surface de positionnement (64, 66) présente au moins une zone de surface de positionnement (72, 74) qui s'étend transversalement à un sens de placement (82).

6. Attelage selon l'une des revendications précédentes, **caractérisé en ce que** l'au moins une seconde surface de positionnement (142) est agencée au niveau du premier corps de positionnement (54).

7. Attelage selon l'une des revendications précédentes, **caractérisé en ce que** la seconde surface de positionnement (142) est agencée au niveau d'un second corps de positionnement (144).

8. Attelage selon l'une des revendications précédentes, **caractérisé en ce que** la seconde surface de positionnement (142) se trouve en dehors d'un contour de projection (PK) de la boule d'attelage (26) qui apparaît par projection de la boule d'attelage (26) sur le corps de positionnement (54, 142) portant celle-ci.

9. Attelage selon l'une des revendications précédentes, **caractérisé en ce que** la seconde surface de positionnement (142) se trouve à l'intérieur d'un contour de projection (PK) de la boule d'attelage (26) qui apparaît par projection de la boule d'attelage (26) sur le corps de positionnement (144) portant la seconde surface de positionnement.

10. Dispositif de retenue de support de charge pour un attelage (10) présentant un col de boule d'attelage (12) et une boule d'attelage (26), pour un attelage (18) selon l'une des revendications précédentes, comprenant un corps de boîtier (84) pourvu d'éléments de retenue (96) avec un logement de boule (86) pour la boule d'attelage (26) du col de boule d'attelage (12) de l'attelage (10), dans lequel les éléments de retenue (96) présentent respectivement au moins un élément de réception de position (104) qui est raccordé fixement au corps de boîtier (84) et qui coagit avec le corps de positionnement (54) agencé au niveau du col de boule d'attelage (12), dans lequel l'élément de réception de position (104) présente des surfaces de réception (114, 116) qui coagissent avec les premières surfaces de positionnement (64, 66) de l'au moins un corps de positionnement (54, 144) dans une position de retenue de support de charge et **caractérisé en ce que** l'élément de retenue (96) présente un côté intérieur (98) ou une zone de paroi (146) contre laquelle l'au moins une seconde surface de positionnement (142) agencée au niveau de la section de col de boule d'attelage (52) du col de boule d'attelage (12) s'appuie.

11. Dispositif de retenue de support de charge selon la revendication 10, **caractérisé en ce que** l'élément de réception de position (104) coagit avec le corps de positionnement (54), en particulier en formant une liaison à complémentarité de formes de telle manière que le corps de boîtier (84) soit fixé contre des mouvements basculants autour d'axes de basculement KAK s'étendant transversalement, en particulier perpendiculairement, à l'axe médian (32) de la boule d'attelage (26) par rapport au col de boule d'attelage (12).

12. Dispositif de retenue de support de charge selon la revendication 10 ou 11, **caractérisé en ce que** le corps de positionnement (54) et l'élément de réception de position (104) coagissent, en particulier en formant une liaison à complémentarité de formes de telle manière que le corps de boîtier (84) soit fixé sans pouvoir tourner contre un mouvement de rotation autour d'un axe de rotation (D) formant parallèlement à l'axe médian (32) de la boule d'attelage (26) ou avec l'axe médian (32) de la boule d'attelage (26) un angle de 20° maximum.

13. Dispositif de retenue de support de charge selon l'une des revendications 10 à 12, **caractérisé en ce que** deux éléments de réception de position (104) sont raccordés fixement au corps de boîtier (84), que les deux éléments de réception de position (104) sont agencés rigidement l'un par rapport à l'autre et qu'en particulier les deux éléments de réception de position (104) sont agencés rigidement par rapport au corps de boîtier (84).

14. Dispositif de retenue de support de charge selon l'une des revendications 10 à 13, **caractérisé en ce que** l'élément de réception de position (104) présente deux surfaces de réception (114, 116) tournées l'une vers l'autre et qu'en particulier le corps de positionnement respectif (54) est agencé avec sa zone portant la surface de positionnement (64, 66) dans une position de retenue de support de charge entre les surfaces de réception (114, 116) de l'au moins un élément de réception de position (104).

15. Dispositif de retenue de support de charge selon l'une des revendications 10 à 14, **caractérisé en ce que** le dispositif de retenue de support de charge (50) présente un dispositif de fixation (140, 170) fixant le corps de boîtier (84) au niveau du col de boule d'attelage (12), que le dispositif de fixation (140, 170) présente un élément de fixation (142, 172) qui fixe le corps de boîtier (84) par rapport au col de boule d'attelage dans la position de retenue de support de charge, que l'élément de fixation (164, 172, 182, 202, 222, 246, 272, 292) agit dans une position de fixation sur le col de boule d'attelage (12''') ou sur le corps de positionnement (54) ou sur la boule d'attelage (26), et qu'en particulier l'élément de fixation (164, 172, 182, 202, 222, 242, 272) est mobile dans un sens de guidage (165, 185, 205, 245) entre une position de détachement et une position de fixation et qu'en particulier l'élément de fixation (164, 172, 182, 202, 222, 242, 272, 292) est mobile par un dispositif d'actionnement (170, 200, 220, 240, 260, 290) dans le sens de guidage (165, 185, 205, 245).

16. Dispositif de retenue de support de charge selon la revendication 15, **caractérisé en ce que** le dispositif d'actionnement présente un entraînement fileté (162, 164, 192, 194, 212, 214, 234, 236, 282, 284) pour le déplacement de l'élément de fixation (164, 172, 182, 202, 222, 242, 272) entre la position de détachement et la position de fixation ou que le dispositif d'actionnement présente un entraînement à genouillère pour le déplacement de l'élément de fixation (292) entre la position de détachement et la position de fixation.
